(19) Europäisches Patentamt
European Patent Office
Office européen des brevets

(11) EP 3 605 051 B1

(12) **EUROPEAN PATENT SPECIFICATION**

(45) Date of publication and mention of the grant of the patent:
**04.05.2022 Bulletin 2022/18**

(21) Application number: **18775471.8**

(22) Date of filing: **22.03.2018**

(51) International Patent Classification (IPC):
***G01M 99/00*** *(2011.01)* ***G01M 5/00*** *(2006.01)*
***G01M 7/00*** *(2006.01)*

(52) Cooperative Patent Classification (CPC):
**G01M 5/0025; G01M 5/0033; G01M 5/0066; G01M 7/00**

(86) International application number:
**PCT/JP2018/011380**

(87) International publication number:
**WO 2018/180880 (04.10.2018 Gazette 2018/40)**

(54) **ANALYZING DEVICE, DIAGNOSING DEVICE, ANALYSIS METHOD, AND COMPUTER-READABLE RECORDING MEDIUM**

ANALYSEVORRICHTUNG, DIAGNOSEVORRICHTUNG, ANALYSEVERFAHREN UND COMPUTERLESBARES AUFZEICHNUNGSMEDIUM

DISPOSITIF D'ANALYSE, DISPOSITIF DE DIAGNOSTIC, PROCÉDÉ D'ANALYSE ET SUPPORT D'ENREGISTREMENT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2017 JP 2017070399**

(43) Date of publication of application:
**05.02.2020 Bulletin 2020/06**

(73) Proprietor: **NEC Corporation**
**Tokyo 108-8001 (JP)**

(72) Inventors:
- **TAKATA Soichiro**
  **Tokyo 108-8001 (JP)**
- **KUMURA Takahiro**
  **Tokyo 108-8001 (JP)**
- **KIKUCHI Katsumi**
  **Tokyo 108-8001 (JP)**

(74) Representative: **Betten & Resch**
**Patent- und Rechtsanwälte PartGmbB**
**Maximiliansplatz 14**
**80333 München (DE)**

(56) References cited:
**WO-A1-02/41193 WO-A1-2017/011850**
**WO-A1-2017/053262 JP-A- H10 339 685**
**JP-A- 2001 289 771 JP-A- 2014 517 301**
**US-A1- 2012 209 538 US-B1- 6 341 258**

- **FRANCISCO L. SILVA-GONZÁLEZ ET AL: "Non-Gaussian Stochastic Equivalent Linearization Method for Inelastic Nonlinear Systems with Softening Behaviour, under Seismic Ground Motions", MATHEMATICAL PROBLEMS IN ENGINEERING, vol. 2014, 1 January 2014 (2014-01-01), pages 1-16, XP055673390, CH ISSN: 1024-123X, DOI: 10.1155/2014/539738**
- **MACHADO M R ET AL: "A spectral approach for damage quantification in stochastic dynamic systems", MECHANICAL SYSTEMS AND SIGNAL PROCESSING, vol. 88, 1 December 2016 (2016-12-01), pages 253-273, XP029857672, ISSN: 0888-3270, DOI: 10.1016/J.YMSSP.2016.11.018**
- **WANG ZIQI ET AL: "Equivalent linearization method using Gaussian mixture (GM-ELM) for nonlinear random vibration analysis", STRUCTURAL SAFETY, ELSEVIER, AMSTERDAM, NL, vol. 64, 28 September 2016 (2016-09-28), pages 9-19, XP029824175, ISSN: 0167-4730, DOI: 10.1016/J.STRUSAFE.2016.08.005**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

• BABA Yuta et al.: "Response distribution of nonlinear systems subjected to non-Gaussian random excitation using Gaussian mixture model", Proceeding of the Japan Society of Mechanical Engineers, vol. 81, no. 823, 25 March 2015 (2015-03-25), pages 1-13, XP009516075, DOI: 10.1299/transjsme.14-00632

## Description

[Technical Field]

The present invention relates to an analyzing device, a diagnosing device, an analysis method, and a computer-readable recording medium.

[Background Art]

Structures such as water pipes deteriorate due to long-term use. In order to accurately grasp the state of deterioration, techniques for predicting and diagnosing the state of deterioration have been developed.

PTL 1 describes a deterioration degree prediction method and the like of a device. The deterioration degree prediction method of the device described in PTL 1 uses recursion period based on statistical distribution of extrema of measured values of physical property for deterioration degree determination derived at any given plurality of points of the device to estimate the maximum or minimum value of the physical property of the device from the values. Then, the deterioration degree prediction method of the device described in PTL 1 predicts the maximum value of deterioration of the device from a database of relation derived in advance between the deterioration degree of the material and the characteristics.

[Citation List]

[Patent Literature]

[PTL 1] Japanese Unexamined Patent Application Publication No. H2-167463A

US 6 341 258 B discloses that a computer grasps the shaking characteristic of a partial structure under the shaking state on the basis of a transfer function.

WO 2017/053262 discloses an estimator with a Kalman filter, wherein when physical sensor data, operation conditions, and load data for a hybrid model are input to the Kalman filter, the Kalman filter outputs estimated POD (Proper Orthogonal Decomposition) coefficients.

A vibration testing apparatus disclosed in JP H10 339685 A calculates stress between a vibration test specimen and a structure coupled to the specimen, while simulating the structure by a numerical model.

WO 2017/011850 discloses a system configured to compare first and second pressure wave interaction signals, and characterise individual features corresponding to pressure wave reflections from localised variations in the pipeline.

[Summary of Invention]

[Technical Problem]

A failure of a structure may be categorized as initial failure, catastrophic failure, and wear failure. For structures in service, the catastrophic failure and wear failure should be considered. And, when diagnosing a structure, it is preferable that both failures be evaluated. That is, for the technique described in PTL 1 and the like, a technique that enables various diagnoses of a structure is desired.

The present invention has been made to solve the above-described problems, and its main object is to provide an analysis device or the like which enables highly accurate diagnosis of a structure state.

[Solution to Problem]

The above object is achieved with the features of the claims.

[Advantageous Effects of Invention]

According to the present invention, it is possible to provide an analysis device or the like that enables highly accurate diagnosis of the state of a structure.

[Brief Description of Drawings]

Fig. 1 is a figure illustrating a configuration of an analysis device of a first example embodiment of the present invention.

Fig. 2 is a figure illustrating a configuration of a diagnostic device of the first example embodiment of the present invention.

Fig. 3 is a figure illustrating a configuration of a diagnostic device and a data acquisition unit of the first example embodiment of the present invention.

Fig. 4 is a figure illustrating an example of modeling of a pipe to be analyzed by a one-degree-of-freedom structural model.

Fig. 5 is a figure illustrating an example of input fluctuation with respect to a structure and a probability model generated by an input modeling unit.

Fig. 6 is a figure illustrating an example of evaluation by a fatigue strength reliability evaluation unit.

Fig. 7 is a flow chart illustrating operation of the diagnostic device of the first example embodiment of the present invention.

Fig. 8 is a flowchart illustrating operation of system identification by the analysis device of the first example embodiment of the present invention.

Fig. 9 is a figure illustrating a configuration of a diagnostic device according to a modification of the first example embodiment of the present invention.

Fig. 10 is a figure illustrating an example of response distribution of vibration response estimated in an example.

Fig. 11 is a figure illustrating an example of displacement restoration force characteristics identified in the example.

Fig. 12 illustrates an example of a probability model for water pressure distribution estimated in the example.

Fig. 13 illustrates an example of stress and tensile strength evaluated in the example.

Fig. 14 illustrates an example of displacement restoration force characteristics identified when deterioration is assumed in the example.

Fig. 15 is a figure illustrating an example of an information processing apparatus for realizing an analysis device or the like of each example embodiment of the present invention.

[Example Embodiment]

Example embodiments of the present invention will be described with reference to the accompanying drawings. In each example embodiment of the present invention, each constituent element of each device indicates a block of a functional unit. A part or all of constituent elements of each device is realized by any combination of an information processing device 1000 and a program as illustrated in Fig. 15, for example. The information processing device 1000 includes, for example, the following configuration.

*CPU (Central Processing Unit) 1001
*ROM (Read Only Memory) 1002
*RAM (Random Access Memory) 1003
*Program 1004 loaded to RAM1003
*Storage device 1005 storing program 1004
*Drive device 1007 for reading and writing recording medium 1006
*Communication interface 1008 connected to communication network 1009
*Input and output interface 1010 for inputting and outputting data
*Bus 1011 for connecting constituent elements

Each constituent element of each device in each example embodiment is realized by the CPU 1001 acquiring and executing the program 1004 that realizes these functions. The program 1004 for realizing the function of each constituent element of each device is stored in advance in, for example, the storage device 1005 or the RAM 1003, and read by the CPU 1001 as necessary. Note that the program 1004 may be supplied to the CPU 1001 via the communication network 1009 or may be stored in advance in the recording medium 1006, and the drive device 1007 may read the program and supply the program 1004 to the CPU 1001.

There are various modifications in the implementation method of each device. For example, each device may be realized by any combination of respective information processing devices 1000 and respective programs for constituent element. In addition, a plurality of constituent elements included in each device may be realized by any combination of an information processing device 1000 and a program.

In addition, a part or all of constituent elements of each device is realized by a general purpose or dedicated circuit (circuitry) including a processor or the like, or a combination thereof. These may be constituted by a single chip or may be constituted by a plurality of chips connected via a bus. A part or all of constituent elements of each device may be realized by a combination of the above-described circuits and the like and programs.

When a part or all of constituent elements of each device is realized by a plurality of information processing devices, circuits, and the like, the plurality of information processing devices, circuits, and the like may be arranged centrally or in a distributed manner. For example, the information processing devices, circuits, and the like may be realized as a form in which each is connected via a communication network, such as a client and server system, a cloud computing system, and the like.

Note that, in the following example embodiments, it is assumed that the structure is a water pipe which is one of pipes. However, the structure may be a pipe other than a water pipe, and is not limited to a pipe. In addition, each device in the following example embodiments may be directed to a structure other than a pipe, such as a water pipe.

(First Example Embodiment)

First, the first example embodiment of the present invention will be described. Fig. 1 is a view illustrating an analysis device of the first example embodiment of the present invention.

As illustrated in Fig. 1, the analysis device 100 of the first example embodiment of the present invention includes a system identification unit 110, an input modeling unit 120, an input generation unit 130, and a response calculation unit 140. The system identification unit 110 uses the non-Gaussian random process of the structure to identify a model representing time evolution of the structure based on the response of the structure. The input modeling unit 120 generates a probability model for the distribution of the input based on the data indicating the fluctuation of the input to the structure. The input generation unit 130 generates an input signal for the structure based on the probability model representing the distribution of the input for the structure. The response calculation unit 140 derives a random response of vibration occurring in the structure with respect to the input signal based on the model of the structure and the input signal to the structure.

Further, as illustrated in Fig. 2, a diagnostic device 10 having an analysis device 100 is configured. The diagnostic device 10 includes an analysis device 100, a stress calculation unit 150, and a reliability evaluation unit 160. The stress calculation unit 150 derives the stress generated in the structural unit based on the response of the structure. As the response of the structure, a value obtained by the response calculation unit 140 is used. The reliability evaluation unit 160 evaluates the reliability of the structure based on the stress generated in the structure. As the stress, a value derived by the stress calculation unit 150 is used.

More specifically, the reliability evaluation unit 160 includes a load strength reliability evaluation unit 161 and a fatigue strength reliability evaluation unit 162. The load strength reliability evaluation unit 161 derives the load strength reliability indicating reliability about catastrophic failure of the structure. The fatigue strength reliability evaluation unit 162 derives fatigue strength reliability indicating reliability on wear failure of the structure. The comprehensive reliability evaluation unit 163 derives the reliability of the structure based on the load strength reliability indicating the reliability about the catastrophic failure of the structure and the fatigue strength reliability indicating the reliability of the wear failure.

The analysis device 100 and the diagnostic device 10 perform analysis and diagnosis using data collected by the data collection unit 180. The data collection unit 180 collects data indicating an input to the structure and a response to the input. When a pipe such as a water pipe is targeted, the data collection unit 180 includes, for example, a vibration sensor 181 and a pressure sensor 182. The vibration sensor 181 detects vibrations propagating in a pipe or a fluid such as water flowing inside the pipe. As the vibration sensor 181, for example, an eddy current displacement sensor, a Doppler velocity sensor, a piezoelectric acceleration sensor, or the like is used.

Pipes such as water pipes are vibrated by fluctuations in water pressure and external vibration. In other words, fluctuations in water pressure cause vibrations in the pipe. Fluctuations of water pressure are input to the structure, and vibration caused by the fluctuations of water pressure is the response of the structure. In the present example embodiment, each of the analysis device 100 and the diagnostic device 10 uses the fluctuations of water pressure as an input to the structure and analyzes the vibration generated due to the fluctuations of water pressure as a response.

The pressure sensor 182 detects the pressure of the fluid flowing inside the pipe. As described above, fluctuations of pressure are an input to the structure. If the pipe is a water pipe, the pressure sensor 182 detects the water pressure. As illustrated in Fig. 3, the vibration sensor 181 is attached to a fire hydrant 502 or the like provided in the pipe 501. Also, the pressure sensor 182 is attached to, for example, the pipe 501.

When the structure is a water pipe, water pressure fluctuation of the water flowing through the water pipe occurs, for example, by releasing the water or controlling a pump provided in the water pipe. In this case, the vibration sensor 181 detects a vibration response which is a vibration generated by the water pressure fluctuation. In addition, the pressure sensor 182 detects water pressure fluctuation. By collecting data of thus detected water pressure fluctuation being the input, and vibration response, the analysis or diagnosis by the analysis device 100 and the diagnostic device 10 is performed.

Subsequently, constituent elements of the analysis device 100 and the diagnostic device 10 of the present example embodiment will be described. First, each constituent element of the analysis device 100 will be described.

The system identification unit 110 identifies a model representing the time evolution of the structure based on the response of the structure. In the present example embodiment, as described above, the structure is a pipe such as a water pipe. The system identification unit 110 uses a non-Gaussian random process to identify a structural model representing time evolution based on the probability model of a response to the structure such as a pipe.

In the present example embodiment, as an example, it is assumed that the model of pipe is represented by a structural model of one degree of freedom based on the resonant frequency of a pipe. Fig. 4 illustrates an example of an assumed structural model. Fig. 4(A) is an example illustrating a cross section of a pipe to be modeled, and Fig. 4(B) is an example of a structural model of the pipe. In the example illustrated in Fig. 4(B), the structural model includes a spring and a damper. Hereinafter, as a specific example of the operation of the system identification unit 110, an example in which the system identification unit 110 identifies a structural model illustrated in Fig. 4(B) will be described. In Fig. 4(A), P denotes water pressure, X denotes displacement of vibration response of a structural model, and V denotes velocity of vibration response of the structural model.

Note that, in the present example embodiment, it is assumed that the pipe which is a target of identification of the structural model illustrated in Fig. 4(B) is a cast iron pipe. Also, in consideration of the material characteristics of cast iron, the pipe is assumed to have non-linear restoration force characteristics. It is assumed that water pressure fluctuation represented by Gaussian white noise is added as water pressure fluctuation input to pipe. However, targets for the analysis device 100 and the like including the system identification unit 110 and the system identification unit 110 are not limited to such a pipe. Also, the input is not limited to the Gaussian input.

The system identification unit 110 treats the equation of motion of the structural model as a stochastic process which is non-deterministic. In the present example embodiment, the system identification unit 110 represents a structural model by using the Fokker-Planck equation. The Fokker-Planck equation is an equation of motion that represents the time evolution of the probability density function with respect to displacement and velocity of vibration of a structure. In other words, the system identification unit 110 identifies a model representing temporal changes in the probability density function of the velocity and the displacement of the vibration of the structure as a model representing the time evolution of the structure. In the system identification unit 110, identification of a structural model based on the following equation (1) can be considered as an example.

[Equation 1]

$$\frac{\partial f(x_1,x_2,t)}{\partial t} = -x_2\frac{\partial f(x_1,x_2,t)}{\partial x_1} + (kx_1 + cx_2 + \varepsilon x_1^2 + \mu x_1^3)\frac{\partial f(x_1,x_2,t)}{\partial x_2} + cf(x_1,x_2,t) + D\frac{\partial^2 f(x_1,x_2,t)}{\partial x_2^2} \cdots (1)$$

In the equation (1), $x_1$ denotes a probability variable of displacement of a structural model, $x_2$ denotes a probability variable of speed of the structural model, and t denotes time. $x_1$ corresponds to the above-described X, and $x_2$ corresponds to the above-described V. f(·) represents a probability density function having · as a probability variable. Also, k denotes a spring constant of the structural model, and c denotes a damping coefficient of the damper of the structural model. Also, in equation (1), terms up to the third order regarding displacement are considered. $\varepsilon$ denotes a second-order nonlinear coefficient, and $\mu$ denotes a third-order nonlinear coefficient. D denotes a diffusion coefficient of water pressure fluctuation which is an input. D is obtained by deriving the probability density of the input based on the detection result by the pressure sensor 182 and the like.

Derivation of the theoretical solution of the Fokker-Planck equation may be difficult in general. Thus, in the present example embodiment, the system identification unit 110 identifies a model based on a moment equation describing the time evolution of the moment with respect to the probability density function. E[x] denotes the moment for the probability density function f(x).

And, the moment equation corresponding to equation (1) is expressed as equation (2). Note that, in equation (2), each of i and j represents the order of moment.

[Equation 2]

$$\frac{dE[x_1^i x_2^j]}{dt} = E[x_2\frac{\partial(x_1^i x_2^j)}{\partial x_1}] - E[(kx_1 + cx_2 + \varepsilon x_1^2 + \mu x_1^3)\frac{\partial(x_1^i x_2^j)}{\partial x_2}] + DE[\frac{\partial^2(x_1^i x_2^j)}{\partial x_2^2}] \ldots (2)$$

Equation (2) is a linear equation for unknown parameters k, c, $\varepsilon$, $\mu$. Also, the displacement, velocity, and the like of vibration obtained by the vibration sensor 181 correspond to the response of these structural models to the fluctuation of water pressure which is input. That is, if the probability density function of the response is obtained based on the vibration detected by the vibration sensor 181, the values of the high-order moments of equation (2) is determined. And the unknown parameter described above is derived by applying the least squares method to the simultaneous equations including high-order moments.

Note that, the probability density function $f(x_1, x_2)$ of response is decomposed as in the following equation (3), and the moment thereof can be obtained as in the following equation (4). In equation (3), $\theta_i$ represents a parameter of each distribution.

[Equation 3]

$$f(x_1, x_2) = f_1(x_1 \mid \theta_1) * f_2(x_2 \mid \theta_2) \quad \cdots (3)$$

[Equation 4]

$$E[x_1 x_2] = E[x_1]E[x_2] \cdots (4)$$

The n-th moment is defined by the following equation (5).

[Equation 5]

$$E[x^n] = \int_{-\infty}^{\infty} x^n f(x) dx \quad \cdots (5)$$

In addition, in the case of obtaining the probability density function of response, it is preferable that non-Gaussianity be considered for the input to the structural model and the response of the structural model. Therefore, the probability density function of response can be obtained by using EM (Expectation-Maximization) algorithm using mixture Gaussian model, latent distribution estimation algorithm using heterogeneous mixture learning, and the like. The system identification unit 110 obtains a moment by using the probability density function obtained by these algorithms.

The simultaneous equations for obtaining the above-described unknown parameters are expressed as equation (6) as an example. In the equation (6), the moments up to the fourth order are considered. Further, Equation (6) shows the case where the second-order nonlinear coefficient $\varepsilon$ is zero. Note that, in the equation (6), the order of the moment to be considered is not limited up to the fourth order. The order of the moment to be considered may be appropriately determined in accordance with various factors such as the type of the structure to be processed.

[Equation 6]

$$Y = X \cdot \theta$$

$$X = \begin{bmatrix} E[x_1^2] & 0 & E[x_1^4] \\ E[x_1^4] & 0 & E[x_1^6] \\ 0 & E[x_1^2 x_2^2] & 0 \\ 3E[x_1^2 x_2^2] & 0 & 3E[x_1^4 x_2^2] \\ 0 & E[x_2^4] & 0 \end{bmatrix}, Y = \begin{bmatrix} E[x_2^2] \\ 3E[x_1^2 x_2^2] \\ E[x_1^2]D \\ E[x_2^4] \\ 3E[x_2^2]D \end{bmatrix}, \theta = \begin{bmatrix} k \\ c \\ \mu \end{bmatrix} \cdots (6)$$

Then, by applying the least squares method to equation (6), equation (7) illustrated below is obtained.

[Equation 7]

$$\theta = (X^T X)^{-1} X^T Y \cdots (7)$$

By using the equation (7), the unknown parameters k, c and $\mu$ described above can be obtained. The derived values are applied to equation (1), so that a structural model is identified.

The input modeling unit 120 models the input signal based on data indicating the fluctuation of the input to the structure. Specifically, the input modeling unit 120 generates a probability model that represents the distribution of the input.

When the structure is a pipe such as a water pipe, fluctuation of pressure of fluid such as water flowing inside is an input to the pipe. That is, the input modeling unit 120 generates, for example, a probability model of water pressure distribution.

The input modeling unit 120 generates a probability model representing a water pressure distribution, which is input, based on data indicating fluctuations of water pressure for several days detected by, for example, the pressure sensor 182. Preferably, the data used to generate the probability model is data sensed and collected by pressure sensor 182 over two or more days. However, the period of data collection is not particularly limited, and may be determined according to the required accuracy, the period in which data can be collected, and the like. Fig. 5(A) illustrates an example of data showing fluctuation of water pressure which is input.

Note that the distribution of water pressure generally follows a Gaussian distribution, but may have non-Gaussianity. However, in the input modeling unit 120, the distribution of water pressure may be treated as a Gaussian distribution. Also, in the input modeling unit 120, the distribution of water pressure may be treated as a non-Gaussian process.

The input modeling unit 120 generates a probability model of the input, for example, using a known algorithm, based on the data of the fluctuation of water pressure collected as described above. In the input modeling unit 120, an EM algorithm using a mixture Gaussian model, a latent distribution algorithm by heterogeneous mixture learning, or the like is used. Fig. 5(B) illustrates an example of the probability model generated by the input modeling unit 120.

The input generation unit 130 generates an input signal for the structure based on the probability model of the input to the structure modeled by the input modeling unit 120. The input generation unit 130 generates an input signal by solving the probability model generated by the input modeling unit 120 with respect to the probability variable and providing random numbers generated using a uniform distribution. The generated input signal is, for example, a signal representing a change in water pressure for a fixed time.

The response calculation unit 140 derives distribution of a random response of the vibration occurring in the structure with respect to the input signal on the basis of the model of the structure identified by the system identification unit 110 and the input signal to the structure generated by the input generation unit 130

The response calculation unit 140 uses, for example, a known numerical integration method such as the Runge-Kutta method to obtain a random response to the input signal. That is, the response calculation unit 140 numerically integrates, according to the method described above, the input signal, which is a random signal generated by the input generation unit 130, which is in accordance with the distribution of the probability model generated by the input modeling unit 120, to obtain the distribution of random responses of structure. As a model of structure, a model identified based on the parameters k, c, and $\mu$ obtained as described above is appropriately used.

Next, each constituent element of the diagnostic device 10 will be explained.

The stress calculation unit 150 obtains the stress occurring in the structure such as a pipe based on the random response of the structure obtained by the response calculation unit 140.

The relationship between displacement of structure and stress is expressed by the following equation (8) as an example.

[Equation 8]

$$\sigma = \frac{M}{AR} = \frac{Eh}{12(1-v^2)AR^3}\left(\frac{\partial U_\theta}{\partial \theta} - \frac{\partial^2 U_r}{\partial \theta^2}\right) \quad \cdots (8)$$

In equation (8), $U_r$ represents the vertical displacement of pipe. $U_r$ corresponds to the distribution of displacements detected by the vibration sensor 181 and the distribution of random responses of displacements of the structure obtained by the response calculation unit 140. $U_\theta$ represents the circumferential displacement of the pipe, and the relational equation can be obtained by specifying the shape function of the pipe. When a function of a cosine function $w=w_0*\cos 2\theta$ is used as the shape function of w, a relation of $U_\theta=-U\theta 0*\sin 2\theta/2$ is obtained. The stress is derived by substituting these into the differential operation of equation (8) and setting 0=0. Also, R denotes the radius of the pipe, E denotes the elastic modulus of the pipe, h denotes the wall thickness of the pipe, A denotes the crosssectional area of the pipe, and L denotes the length of the pipe. For A, h and L, a relationship A=hL holds. v denotes Poisson's ratio.

The reliability evaluation unit 160 evaluates the reliability of the structure based on the distribution of stress occurring in the structure derived by the stress calculation unit 150. The reliability evaluation unit 160 comprehensively evaluates catastrophic failure and wear failure of the structure such as a pipe or the like.

The failure of the structure may be explained by reliability theory. In this case, it is necessary to evaluate reliability regarding both catastrophic failure and wear failure in the structure in service. The reliability regarding catastrophic failure is expressed, for example, using a known load strength model. The load strength model is determined based on the strength of the structure and the probability that load is applied to the structure for the first time. The reliability regarding wear failure is expressed using the load cycle model or the extreme value statistical model. The reliability evaluation unit 160 evaluates each of the reliability of catastrophic failure and wear failure of the structure of the pipe or the like. The reliability evaluation unit 160 then evaluates the reliability with respect to the strength of the structure on the basis of the evaluated reliability regarding the catastrophic failure and the wear.

As described above, the reliability evaluation unit 160 includes the load strength reliability evaluation unit 161, the fatigue strength reliability evaluation unit 162, and the comprehensive reliability evaluation unit 163.

The load strength reliability evaluation unit 161 derives load strength reliability. More specifically, the load strength reliability evaluation unit 161 derives load strength reliability of a structure such as a pipe by using a load strength model based on the distribution of stress. As the load strength model, as described above, a known model is suitably used. The reliability derived by the load strength reliability evaluation unit 161 is related to the reliability of catastrophic failure. Hereinafter, the reliability represented by load strength reliability evaluation unit 161 is denoted as Ri.

The fatigue strength reliability evaluation unit 162 derives fatigue strength reliability. More specifically, the fatigue strength reliability evaluation unit 162 derives fatigue strength of the structure such as a pipe on the basis of stress distribution and fatigue strength of the structure by using a method such as rain flow method. The reliability derived by the fatigue strength reliability evaluation unit 162 is related to the reliability of wear failure. Hereinafter, the reliability represented by fatigue strength reliability evaluation unit 162 is denoted as $R_2$.

As illustrated in Fig. 6, the structure fatigue strength is expressed as the relationship between the number of cycles in which stress is applied to the structure and the magnitude of the amplitude of the stress permitted in the number of cycles. The fatigue strength reliability evaluation unit 162 decomposes the amplitude and the frequency in the process of stress, and derives a lifetime of the structure by adopting, as the lifetime, the number of cycles corresponding to the most frequent amplitude of stress in the distribution of stress, on the relationship for the fatigue strength. And the fatigue strength reliability evaluation unit 162 derives a reliability $R_2$ on the basis of the following equation (9) with the reciprocal of the lifetime being a failure rate. Note that T denotes the number of cycles with which the end of the lifetime comes, and t denotes time.

[Equation 9]

$$R_2(t) = \exp(-\frac{t}{T}) \cdots (9)$$

The comprehensive reliability evaluation unit 163 evaluates the reliability of the structure on the basis of the evaluation result of reliability of catastrophic failure derived by the load strength reliability evaluation unit 161 and the evaluation result of reliability of wear failure derived by the fatigue strength reliability evaluation unit 162.

When the structure is a pipe, a failure of the pipe may lead to a stoppage of functions when either catastrophic failure or wear failure occurs. That is, leakage or the like of the pipe may occur and replacement of the pipe may be necessary in the case of either catastrophic failure or wear failure.

Therefore, in the present example embodiment, the reliability evaluation unit 160 derives the reliability in which both catastrophic failure and wear failure are considered for the structure of the pipe or the like. More specifically, the reliability evaluation unit 160 derives the reliability by using the following equation (10). That is, the reliability evaluation unit 160 adopts the product of two reliabilities as a comprehensive reliability in which both catastrophic failure and wear failure are considered for the structure of the pipe or the like.

[Equation 10]

$$R = R_1 \times R_2 \cdots (10)$$

Subsequently, operations of the analysis device 100 and the diagnostic device 10 will be described with reference to the flowchart illustrated in Fig. 7.

First, the data collection unit 180 measures the input and response of a structure (step S11). As illustrated in Fig. 3, when the structure is a pipe, the pressure sensor 182 measures the fluctuation of the water pressure input to the pipe, and the vibration sensor 181 measures the vibration that is the response of the pipe. The analysis device 100 and the diagnostic device 10 acquire data measured via a wired or wireless communication network or any type of recording medium.

The processing from step S12 to step S15 is mainly performed by each element of the analysis device 100. First, system identification unit 110 executes system identification of the structure (step S12). Details of the process to be executed will be described later.

The input modeling unit 120 models the input signal (step S13). That is, the input modeling unit 120 generates a probability model of the input signal on the basis of data indicating the water pressure fluctuation or the like detected by the pressure sensor 182 of the data collection unit 180.

Subsequent to step S13, the input generation unit 130 generates an input signal to be applied to the structure by using the probability model generated in step S13 (step S14).

Note that the order of execution of the two processes, i.e., the process of step S12 and the process of step S13 and S14 is not limited. These processes may be performed in parallel as illustrated in the flowchart in Fig. 7. Also, these processes may be performed sequentially in an arbitrary order.

Subsequently, the response calculation unit 140 calculates a random response of the structure (step S15). The response calculation unit 140 calculates the distribution of random response by using a known method or the like on the basis of the input signal to the structure obtained in step S14 and the model of the structure generated in step S12. In step S15, the response calculation unit 140 derives at least the distribution of response relating to displacement.

The stress calculation unit 150 calculates the distribution of stress occurring in the structure on the basis of the random response obtained in step S15 (step S16). The stress calculation unit 150 mainly derives the distribution of stress on the basis of the distribution of displacement obtained in step S15.

Subsequently, in the process from step S17 to step S19, the reliability evaluation unit 16 evaluates reliability of the structure.

First, the load strength reliability evaluation unit 161 evaluates load strength reliability (step S17). That is, the load strength reliability evaluation unit 161 evaluates reliability of catastrophic failure.

The fatigue strength reliability evaluation unit 162 evaluates fatigue strength reliability (step S18). That is, the fatigue strength reliability evaluation unit 162 evaluates reliability of wear failure.

Note that the order of execution of the processing of step S17 and the processing of step S18 is not limited. These processes may be performed in parallel, as in the flowchart illustrated in Fig. 7, or, these processes may be performed sequentially in any order.

Subsequently, the comprehensive reliability evaluation unit 163 evaluates the reliability of the structure on the basis of the load strength reliability obtained at step S17 and the fatigue strength reliability obtained at step S18. (step S19).

Also, system identification in step S12 is performed in accordance with the flowchart illustrated in Fig. 8. The operation of system identification by the system identification unit 110 will be described with reference to the flowchart illustrated in Fig. 8.

First, the system identification unit 110 obtains the data of the vibration measured by the vibration sensor 181 of the data collection unit 180 in the structure that is the target of system identification (step S101).

Subsequently, the system identification unit 110 estimates a probability density function of response based on the data of the vibration measured by step S101 (step S102).

Subsequently, the system identification unit 110 calculates a moment of the probability density function by using the probability density function of the response estimated in step S102 (step S103). In this case, the system identification unit 110 calculates higher order moments up to a predetermined order. Also, the system identification unit 110 may receive a specification of the maximum order of the higher order moments.

Subsequently, the system identification unit 110 calculates parameters relating to the above-described structural model (step S104). By calculating the parameters, a structural model of the structure is identified.

As described above, the analysis device 100 of the present example embodiment identifies a model representing the time evolution of the structure using a non-Gaussian random process based on the distribution of the response of the structure. Then, based on the model representing the time evolution, the analysis device 100 obtains, as a distribution, the response to the input applied to the structure and the stress occurring in the structure.

In the case of a model in the range of Gaussianity where nonlinearity is not considered, the response distribution, that is, the stress distribution may be overestimated if the structure has a gradually harden spring characteristic. Also, in such a model, the stress distribution may be underestimated if the structure has a gradually soften spring characteristic. As a result, the reliability R described above for the structure may not be evaluated correctly.

On the other hand, in the analysis device 100, a non-Gaussian model is identified. Therefore, the problems described above can be avoided. In addition, since catastrophic failure is represented by a load strength model, it is possible to evaluate reliability for catastrophic failure by realizing the stress evaluation and strength evaluation as described above.

Therefore, by using the results obtained by the analysis device 100, it is possible to accurately evaluate the reliability in view of not only the wear failure but also the catastrophic failure. That is, the analysis device 100 and the diagnostic device 10 enable highly accurate diagnosis of the state of the structure.

(Modification)

Modifications can be considered for the analysis device 100 and the diagnostic device 10 shown in the above-mentioned example embodiment. Some of the modifications are illustrated below.

Fig. 9 illustrates a configuration of a diagnostic device 11 according to a modification of the example embodiment described above. As illustrated in Fig. 9, the diagnostic device 11 differs from the diagnostic device 10 in that it has a strength estimation unit 170 as compared with the diagnostic device 10 described above.

The strength estimation unit 170 estimates the strength of the structure when the data is collected, based on the vibration of the structure detected by the vibration sensor 181. The strength estimation unit 170 derives estimated tensile strength and the estimated fatigue strength of the structure when data is collected, by using a known method as appropriate. In this case, the strength estimation unit 170 derives, for example, the distribution of these values of strength.

And, in this modification, the load strength reliability evaluation unit 161 evaluates load strength reliability of the structure on the basis of the distribution of the estimated tensile strength of the structure estimated by the strength estimation unit 170 and the distribution of the stress derived by the stress calculation unit 150. Similarly, the fatigue strength reliability evaluation unit 162 evaluates the fatigue strength of the structure on the basis of the distribution of estimated fatigue strength of the structure estimated by strength estimation unit 170 and the distribution of the stress derived by stress calculation unit 150.

As described above, also in the case where the strength estimation unit 170 is provided, the diagnostic device 11 has the same effect as the diagnostic device 10.

(Example)

The diagnostic device 10 described above was applied to the diagnosis of reliability of structure. In this example, an experiment was conducted to diagnose the reliability for the water pipe after use. A normal gray cast iron pipe with a diameter of 100 mm (millimeter) and a length of 5 m (meter) was used as the water pipe. Water was passed with a test rig to the water pipe to be tested.

The water pipe to be tested had fire hydrants at both ends and was closed at the ends. There was no flow in the water inside the water pipe.

In addition, a pressure pump was installed upstream of the water pipe. And a hydrodynamic pressure shaker was installed in the fire hydrant on the upstream side. An eddy current displacement sensor and a laser doppler vibrometer were installed as a vibration sensor 181 at the fire hydrant on the downstream side. Also, a hydrodynamic pressure sensor was installed as a pressure sensor 182 at the fire hydrant on the downstream side.

With respect to the water pipe described above, the water pipe was vibrated by generating a white noise sequence using a hydrodynamic pressure shaker with the hydrostatic pressure of the water passed through inside as 0.6 MPa (Mega Pascal). And, the vibration response and the hydraulic pressure response to the vibration by the hydrodynamic pressure shaker were measured by each sensor mentioned above. In this case, the measurement of the vibration response was performed under the condition that the measurement range was $\pm 10$ V (volts), the number of bits for AD (Analog-to-digital) conversion was 16 bits, and the sampling frequency was 3 kHz. The measurement was performed for 5,000 seconds.

Based on the data measured by the eddy current displacement sensor and the laser Doppler vibrometer, the system identification unit 110 derived the probability density function of the vibration response. In this case, the system identification unit 110 fitted the vibration response to the mixed Gaussian model of third order. The system identification unit 110 used the EM algorithm to estimate the probability density function. And the convergence of the estimated value of the parametric parameter was confirmed by repeating 25 steps.

Fig. 10 illustrates an example where the vibration response is fitted to the mixed Gaussian model of third order. That is, Fig. 10(A) illustrates displacement of the measured vibration response, and Fig. 10(B) illustrates a probability density function of the distribution of displacement estimated based on the measured value. Fig. 10(C) illustrates measured velocity of vibration response, and Fig. 10(D) illustrates a probability density function of the distribution of the velocity estimated based on the measured value.

Subsequently, the system identification unit 110 derived the high-order moments from the probability density function derived. Then, the system identification unit 110 identified the model based on equation (7), using the higher order moments derived. Fig. 11 illustrates the displacement restoration force characteristic identified by the system identification unit 110. In Fig. 11, a broken line indicates a true value which is the actual value obtained by the sensor, and a solid line indicates a value obtained using the identified model.

As illustrated in Fig. 11, the difference between the two values was small, and it was confirmed that the identified model and the behavior of the actual water pipe were in good agreement. That is, it was confirmed that a restoration force characteristic including nonlinearity was obtained with regard to the identified model.

Then, the input modeling unit 120 performed the probability modeling of the water pressure distribution that was input. As data of water pressure fluctuation, data for 2 days measured in a cast iron pipe of the same diameter and made of the same material was used. The input modeling unit 120 used EM algorithm for univariate Gaussian distribution in modeling. Then, it was confirmed that the estimation of the parametric parameters converged by repeating the 5 steps. Fig. 12 illustrates an example of water pressure distribution and probability model. Fig. 12(A) is the measured water pressure distribution. Also, Fig. 12(B) illustrates an example of the probability model estimated by the input modeling unit 120 based on the water pressure distribution illustrated in Fig. 12(A).

And the response calculation unit 140 derived the response of the water pipe by using the probability model described above. The stress calculation unit 150 derived the stress occurring in the water pipe based on the response obtained by the response calculation unit 140.

When stress was derived, the reliability evaluation unit 160 evaluated the reliability. Note that, in addition, the reliability evaluation unit 160 used the value of the tensile strength described in 'Jesson DA, Mohebbi H, Farrow J, Mulheron MJ, Smith PA. (2013), "On the condition assessment of cast iron trunk main: The effect of microstructure and inservice graphitisation on mechanical properties in flexure", Materials Science and Engineering A, 576, pp. 192-201.' for evaluation of the reliability. Fig. 13 illustrates the result of deriving the relationship between stress and tensile strength, which is derived by comparing with the value of tensile strength described in the above-mentioned document.

The load strength reliability evaluation unit 161 derived load strength reliability Ri as Ri=0.99995. The fatigue strength reliability evaluation unit 162 derived fatigue strength reliability $R_2$ as $R_2$=0.999997. Then, based on the reliability $R_1$ and $R_2$, the reliability evaluation unit 160 derived the reliability to be R=0.999947 using the above-mentioned equation (10).

The derived reliability R was calculated as a value smaller than load strength reliability Ri. Therefore, it was confirmed that the reliability was evaluated on the safe side by the diagnostic device 10. That is, it was confirmed that the reliability was evaluated so that it is less likely to fail to notice that the water pipe stops functioning by failure.

Subsequently, with respect to the structural model identified in the system identification unit 110, the evaluation of the reliability in the case of simulating the deterioration was further performed. In this case, as an example of the deterioration, the value of the spring constant k included in the structural model obtained by the system identification unit 110 was reduced by 5% (percent). An example of the structural model in this case is illustrated in Fig. 14. Using the modified structural model, the response calculation unit 140 derived the response of the water pipe, and the stress calculation unit 150 derived the stress occurring in the water pipe based on the response.

Then, the reliability evaluation unit 160 evaluated the reliability based on the stress obtained using the modified structural model. In this case, the load strength reliability evaluation unit 161 derived load strength reliability Ri as Ri=0.99994. The fatigue strength reliability evaluation unit 162 derived fatigue strength reliability $R_2$ as $R_2$=0.999994. And the reliability evaluation unit 160 calculated reliability as R=0.999934 using the equation (10) explained above based on reliability $R_1$ and $R_2$.

In this case, the obtained value of reliability R was smaller than the reliability R in the previous example. In other words, it was confirmed that the diagnostic device 10 properly evaluated the deterioration degree according to the state of deterioration.

Also in this case, the reliability R was obtained as a smaller value than load strength reliability Ri. Therefore, it was confirmed that the reliability is evaluated on the safe side by the diagnostic device 10, as in the previous example. In other words, it was also confirmed that, even in the case of simulating the deterioration, the reliability is evaluated so that it is less likely to fail to notice that the water pipe stops functioning by failure.

While the invention has been particularly shown and described with reference to example embodiments thereof, the invention is not limited to these embodiments. It will be understood by those of ordinary skill in the art that various changes in form and details may be made therein without departing from the scope of the present invention as defined by the claims.

[Reference signs List]

| | |
|---|---|
| 10 | diagnostic device |
| 100 | analysis device |
| 110 | system identification unit |
| 120 | input modeling unit |
| 130 | input generation unit |
| 140 | response calculation unit |
| 150 | stress calculation unit |
| 160 | reliability evaluation unit |
| 161 | load strength reliability evaluation unit |
| 162 | fatigue strength reliability evaluation unit |
| 163 | comprehensive reliability evaluation unit |
| 170 | strength estimation unit |
| 180 | data collection unit |
| 181 | vibration sensor |
| 182 | pressure sensor |

## Claims

1. An analysis device comprising:

   data collection means (180) for measuring an input to a structure and a response of the structure to the input;
   system identification means (110) for identifying a model representing time evolution of the structure using a non-Gaussian random process, based on a distribution of the response of the structure;
   input modeling means (120) for generating a probability model representing a distribution of the input, based on data indicating fluctuation of the input to the structure;
   input generation means (130) for generating an input signal for the structure based on the probability model;
   response calculation means (140) for deriving random response of vibration occurring in the structure in response to the input signal, based on the model representing time evolution of the structure and the input signal; and
   stress calculating means (150) for calculating stress occurring in the structure, based on the derived random response.

2. The analysis device according to claim 1, wherein the system identification means (110) identifies the model, based on a probability density function of displacement and velocity of the vibration which is the response.

3. The analysis device according to claim 2, wherein the system identification means (110) identifies the model representing time evolution of the probability density function of the displacement and the velocity of the vibration.

4. The analysis device according to claim 2 or 3, wherein the system identification means (110) identifies the model, based on moment of the probability density function of the displacement and the velocity of the vibration.

5. The analysis device according to any one of claims 1 to 4, wherein the structure is a pipe.

6. The analysis device according to claim 5, wherein the input modeling means (120) generates the probability model representing the distribution of pressure based on the pressure fluctuation of the fluid flowing through the pipe collected in a predetermined time period.

7. The analysis device according to claim 6, wherein the input generation means (130) generates the input signal representing fluctuation of the pressure, based on the probability model.

8. The analysis device according to claim 7, wherein the response calculation means (140) derives the random response of vibration occurring in the structure in response to the fluctuation of the pressure represented by the input signal.

9. A diagnostic device comprising:

   the analysis device according to any one of claims 1 to 8; and
   reliability evaluation means (160) for evaluating reliability including catastrophic failure and wear failure of the structure, based on the stress.

10. The diagnostic device according to claim 9, wherein the reliability evaluation means (160) comprises:

    load strength reliability evaluation means (161) for evaluating load strength reliability indicating reliability with respect to catastrophic failure of the structure;
    fatigue strength reliability evaluation means (162) for evaluating fatigue strength reliability indicating reliability with respect to wear failure of the structure; and
    comprehensive reliability evaluation means (163) for evaluating reliability of the structure, based on the load strength reliability and the fatigue strength reliability.

11. The diagnostic device according to claim 10, wherein the load strength reliability evaluation means (161) evaluates the load strength reliability, based on the stress and relationship between the stress and strength of the structure.

12. The diagnostic device according to claim 10, wherein the comprehensive reliability evaluation means (163) evaluates the fatigue strength reliability, based on the stress and fatigue strength of the structure.

13. The diagnostic device according to any one of claims 10 to 12, wherein the comprehensive reliability evaluation means (163) derives the reliability of the structure, based on a product of the load strength reliability and the fatigue strength reliability.

**14.** An analysis method comprising:

measuring an input to a structure and a response of the structure to the input;
identifying a model representing time evolution of the structure using a non-Gaussian random process, based on the response of the structure;
generating a probability model representing a distribution of the input, based on data indicating fluctuation of the input to the structure;
generating an input signal for the structure based on the probability model;
deriving random response of vibration occurring in the structure in response to the input signal, based on the model representing time evolution of the structure and the input signal; and
calculating stress occurring in the structure, based on the derived random response.

**15.** A program for causing a computer to execute the method according to claim 14.

## Patentansprüche

**1.** Analysevorrichtung, umfassend:

eine Daten-Sammeleinrichtung (180) zum Messen einer Eingabe zu einer Struktur und einer Reaktion der Struktur auf die Eingabe;
eine System-Identifikationseinrichtung (110) zum Identifizieren eines Modells, das eine Zeitentwicklung der Struktur darstellt, unter Verwendung eines nicht-gaußscheren Zufallsprozesses, basierend auf einer Verteilung der Reaktion der Struktur;
eine Eingabe-Modellierungseinrichtung (120) zum Erzeugen eines Wahrscheinlichkeitsmodells, das eine Verteilung der Eingabe darstellt, basierend auf Daten, die eine Schwankung der Eingabe zur Struktur anzeigen;
eine Eingabe-Erzeugungseinrichtung (130) zum Erzeugen eines Eingangssignals für die Struktur basierend auf dem Wahrscheinlichkeitsmodell;
eine Reaktions-Berechnungseinrichtung (140) zum Ableiten einer Zufallsreaktion einer Schwingung, die in der Struktur in Reaktion auf das Eingangssignal auftritt, basierend auf dem Modell, das eine Zeitentwicklung der Struktur darstellt, und dem Eingangssignal; und
eine Beanspruchungs-Berechnungseinrichtung (150) zum Berechnen einer Beanspruchung, die in der Struktur auftritt, basierend auf der abgeleiteten Zufallsreaktion.

**2.** Analysevorrichtung nach Anspruch 1, wobei die System-Identifikationseinrichtung (110) das Modell basierend auf einer Wahrscheinlichkeitsdichtefunktion einer Verschiebung und Geschwindigkeit der Schwingung, die die Reaktion ist, identifiziert.

**3.** Analysevorrichtung nach Anspruch 2, wobei die System-Identifikationseinrichtung (110) das Modell, das eine Zeitentwicklung der Wahrscheinlichkeitsdichtefunktion der Verschiebung und Geschwindigkeit der Schwingung darstellt, identifiziert.

**4.** Analysevorrichtung nach Anspruch 2 oder 3, wobei die System-Identifikationseinrichtung (110) das Modell basierend auf einem Moment der Wahrscheinlichkeitsdichtefunktion der Verschiebung und Geschwindigkeit der Schwingung identifiziert.

**5.** Analysevorrichtung nach einem der Ansprüche 1 bis 4, wobei die Struktur ein Rohr ist.

**6.** Analysevorrichtung nach Anspruch 5, wobei die Eingabe-Modellierungseinrichtung (120) das Wahrscheinlichkeitsmodell, das die Verteilung von Druck darstellt, basierend auf der Druckschwankung des durch das Rohr fließenden Fluids, gesammelt in einer vorbestimmten Zeitperiode, erzeugt.

**7.** Analysevorrichtung nach Anspruch 6, wobei die Eingabe-Erzeugungseinrichtung (130) das Eingangssignal, das eine Schwankung des Drucks darstellt, basierend auf dem Wahrscheinlichkeitsmodell erzeugt.

**8.** Analysevorrichtung nach Anspruch 7, wobei die Reaktions-Berechnungseinrichtung (140) die Zufallsreaktion einer Schwingung ableitet, die in der Struktur in Reaktion auf die durch das Eingangssignal dargestellte Schwankung des Drucks auftritt.

**9.** Diagnosevorrichtung, umfassend:

die Analysevorrichtung nach einem der Ansprüche 1 bis 8; und
eine Zuverlässigkeits-Bewertungseinrichtung (160) zum Bewerten einer Zuverlässigkeit einschließlich eines Katastrophenausfalls und eines Verschleißausfalls der Struktur basierend auf der Beanspruchung.

**10.** Diagnosevorrichtung nach Anspruch 9, wobei die Zuverlässigkeits-Bewertungseinrichtung (160) folgendes umfasst:

eine Belastungsfestigkeitszuverlässigkeits-Bewertungseinrichtung (161) zum Bewerten einer Belastungsfestigkeitszuverlässigkeit, die eine Zuverlässigkeit in Bezug auf einen Katastrophenausfall der Struktur anzeigt;
einen Ermüdungsfestigkeitszuverlässigkeits-Bewertungseinrichtung (162) zum Bewerten einer Ermüdungsfestigkeitszuverlässigkeit, die eine Zuverlässigkeit in Bezug auf einen Verschleißausfall der Struktur anzeigt; und
eine Gesamtzuverlässigkeits-Bewertungseinrichtung (163) zum Bewerten einer Zuverlässigkeit der Struktur basierend auf der Belastungsfestigkeitszuverlässigkeit und der Ermüdungsfestigkeitszuverlässigkeit.

**11.** Diagnosevorrichtung nach Anspruch 10, wobei die Belastungsfestigkeitszuverlässigkeits-Bewertungseinrichtung (161) die Belastungsfestigkeitszuverlässigkeit basierend auf der Beanspruchung und einer Beziehung zwischen der Beanspruchung und einer Festigkeit der Struktur bewertet.

**12.** Diagnosevorrichtung nach Anspruch 10, wobei die Gesamtzuverlässigkeits-Bewertungseinrichtung (163) die Ermüdungsfestigkeitszuverlässigkeit basierend auf der Beanspruchung und einer Ermüdungsfestigkeit der Struktur bewertet.

**13.** Diagnosevorrichtung nach einem der Ansprüche 10 bis 12, wobei die Gesamtzuverlässigkeits-Bewertungseinrichtung (163) die Zuverlässigkeit der Struktur basierend auf einem Produkt aus der Belastungsfestigkeitszuverlässigkeit und der Ermüdungsfestigkeitszuverlässigkeit ableitet.

**14.** Analyseverfahren, umfassend:

Messen einer Eingabe zu einer Struktur und einer Reaktion der Struktur auf die Eingabe;
Identifizieren eines Modells, das eine Zeitentwicklung der Struktur darstellt, unter Verwendung eines nichtgaußscheren Zufallsprozesses basierend auf der Reaktion der Struktur;
Erzeugen eines Wahrscheinlichkeitsmodells, das eine Verteilung der Eingabe darstellt, basierend auf Daten, die eine Schwankung der Eingabe zu der Struktur darstellen;
Erzeugen eines Eingangssignals für die Struktur basierend auf dem Wahrscheinlichkeitsmodell;
Ableiten einer Zufallsreaktion einer Schwingung, die in der Struktur auftritt, in Reaktion auf das Eingangssignal basierend auf dem Modell, das eine Zeitentwicklung der Struktur darstellt, und dem Eingangssignal; und
Berechnen von Beanspruchung, die in der Struktur auftritt, basierend auf der abgeleiteten Zufallsreaktion.

**15.** Programm zum Veranlassen, dass ein Computer das Verfahren nach Anspruch 14 ausführt.

## Revendications

**1.** Dispositif d'analyse comprenant :

des moyens de collecte de données (180) pour mesurer une entrée dans une structure et une réponse de la structure à l'entrée ;
des moyens d'identification de système (110) pour identifier un modèle représentant une évolution dans le temps de la structure en utilisant un processus aléatoire non gaussien, sur la base d'une répartition de la réponse de la structure ;
des moyens de modélisation d'entrée (120) pour générer un modèle de probabilité représentant une répartition de l'entrée, sur la base de données indiquant une fluctuation de l'entrée dans la structure ;
des moyens de génération d'entrée (130) pour générer un signal d'entrée pour la structure sur la base du modèle de probabilité ;
des moyens de calcul de réponse (140) pour déduire une réponse aléatoire de vibration survenant dans la structure en réponse au signal d'entrée, sur la base du modèle représentant une évolution dans le temps de la structure et du signal d'entrée ; et
des moyens de calcul de contrainte (150) pour calculer une contrainte survenant dans la structure, sur la base de la réponse aléatoire déduite.

2. Dispositif d'analyse selon la revendication 1, dans lequel les moyens d'identification de système (110) identifient le modèle, sur la base d'une fonction de densité de probabilité de déplacement et de vitesse de la vibration qui est la réponse.

3. Dispositif d'analyse selon la revendication 2, dans lequel les moyens d'identification de système (110) identifient le modèle représentant une évolution dans le temps de la fonction de densité de probabilité du déplacement et de la vitesse de la vibration.

4. Dispositif d'analyse selon la revendication 2 ou 3, dans lequel les moyens d'identification de système (110) identifient le modèle, sur la base d'un moment de la fonction de densité de probabilité du déplacement et de la vitesse de la vibration.

5. Dispositif d'analyse selon l'une quelconque des revendications 1 à 4, dans lequel la structure est un tuyau.

6. Dispositif d'analyse selon la revendication 5, dans lequel les moyens de modélisation d'entrée (120) génèrent le modèle de probabilité représentant la répartition de pression sur la base de la fluctuation de pression du fluide s'écoulant à travers le tuyau collecté au cours d'une période de temps prédéterminée.

7. Dispositif d'analyse selon la revendication 6, dans lequel les moyens de génération d'entrée (130) génèrent le signal d'entrée représentant une fluctuation de la pression, sur la base du modèle de probabilité.

8. Dispositif d'analyse selon la revendication 7, dans lequel les moyens de calcul de réponse (140) dérivent la réponse aléatoire de vibration survenant dans la structure en réponse à la fluctuation de la pression représentée par le signal d'entrée.

9. Dispositif de diagnostic comprenant :

le dispositif d'analyse selon l'une quelconque des revendications 1 à 8 ; et
des moyens d'évaluation de fiabilité (160) pour évaluer une fiabilité comportant une défaillance catastrophique et une défaillance d'usure de la structure, sur la base de la contrainte.

10. Dispositif de diagnostic selon la revendication 9, dans lequel les moyens d'évaluation de fiabilité (160) comprennent :

des moyens d'évaluation de fiabilité de résistance à la charge (161) pour évaluer une fiabilité de résistance à la charge indiquant une fiabilité en ce qui concerne une défaillance catastrophique de la structure ;
des moyens d'évaluation de fiabilité de résistance à la fatigue (162) pour évaluer une fiabilité de résistance à la fatigue indiquant une fiabilité en ce qui concerne une défaillance d'usure de la structure ; et
des moyens d'évaluation de fiabilité complète (163) pour évaluer une fiabilité de la structure, sur la base de la fiabilité de résistance à la charge et de la fiabilité de résistance à la fatigue.

11. Dispositif de diagnostic selon la revendication 10, dans lequel les moyens d'évaluation de fiabilité de résistance à la charge (161) évaluent la fiabilité de résistance à la charge, sur la base de la contrainte et de la relation entre la contrainte et la résistance de la structure.

12. Dispositif de diagnostic selon la revendication 10, dans lequel les moyens d'évaluation de fiabilité complète (163) évaluent la fiabilité de résistance à la fatigue, sur la base de la résistance à la contrainte et à la fatigue de la structure.

13. Dispositif de diagnostic selon l'une quelconque des revendications 10 à 12, dans lequel les moyens d'évaluation de fiabilité complète (163) dérivent la fiabilité de la structure, sur la base d'un produit de la fiabilité de résistance à la charge et de la fiabilité de résistance à la fatigue.

**14.** Procédé d'analyse comprenant :

la mesure d'une entrée dans une structure et d'une réponse de la structure à l'entrée ;
l'identification d'un modèle représentant une évolution temporelle de la structure en utilisant un processus aléatoire non gaussien, sur la base de la réponse de la structure ;
la génération d'un modèle de probabilité représentant une répartition de l'entrée, sur la base de données indiquant une fluctuation de l'entrée dans la structure ;
la génération d'un signal d'entrée pour la structure sur la base du modèle de probabilité ;
la déduction d'une réponse aléatoire de vibration survenant dans la structure en réponse au signal d'entrée, sur la base du modèle représentant une évolution temporelle de la structure et du signal d'entrée ; et
le calcul d'une contrainte survenant dans la structure, sur la base de la réponse aléatoire déduite.

**15.** Programme pour amener un ordinateur à exécuter le procédé selon la revendication 14.

Fig.1

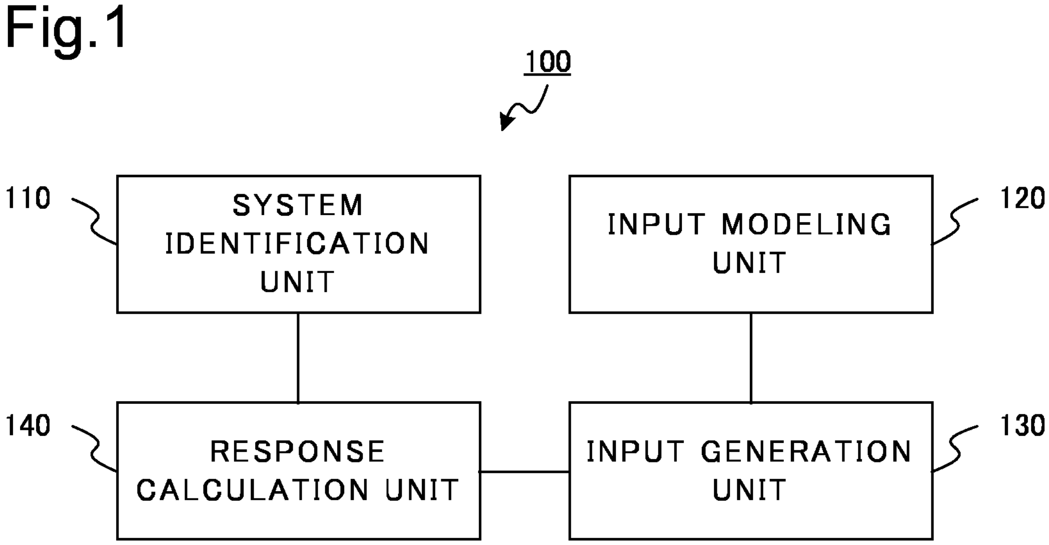
100
110
SYSTEM IDENTIFICATION UNIT
120
INPUT MODELING UNIT
140
RESPONSE CALCULATION UNIT
130
INPUT GENERATION UNIT

Fig.2

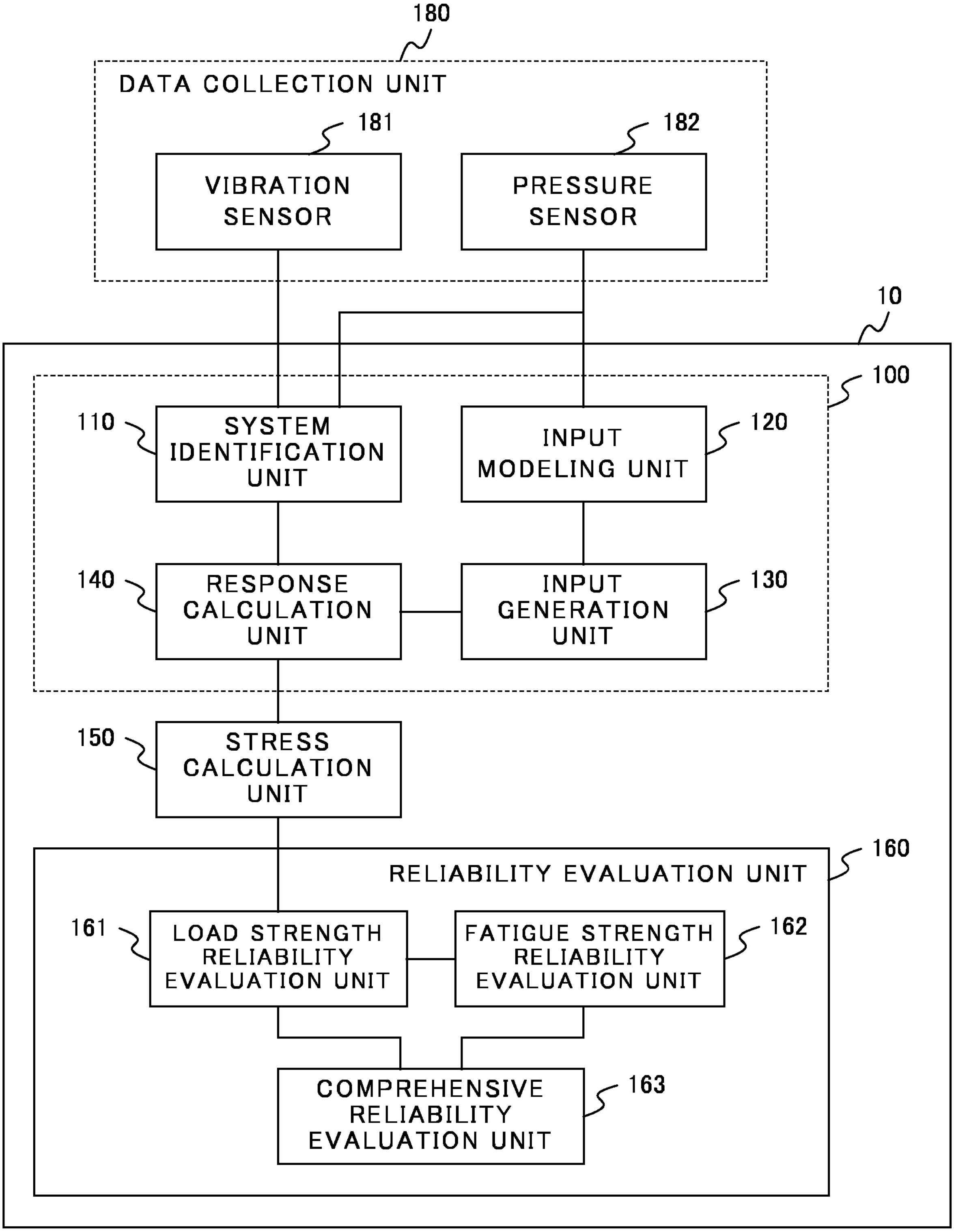
180
DATA COLLECTION UNIT
181
VIBRATION SENSOR
182
PRESSURE SENSOR
10
100
110
SYSTEM IDENTIFICATION UNIT
120
INPUT MODELING UNIT
140
RESPONSE CALCULATION UNIT
130
INPUT GENERATION UNIT
150
STRESS CALCULATION UNIT
160
RELIABILITY EVALUATION UNIT
161
LOAD STRENGTH RELIABILITY EVALUATION UNIT
162
FATIGUE STRENGTH RELIABILITY EVALUATION UNIT
163
COMPREHENSIVE RELIABILITY EVALUATION UNIT

Fig.3

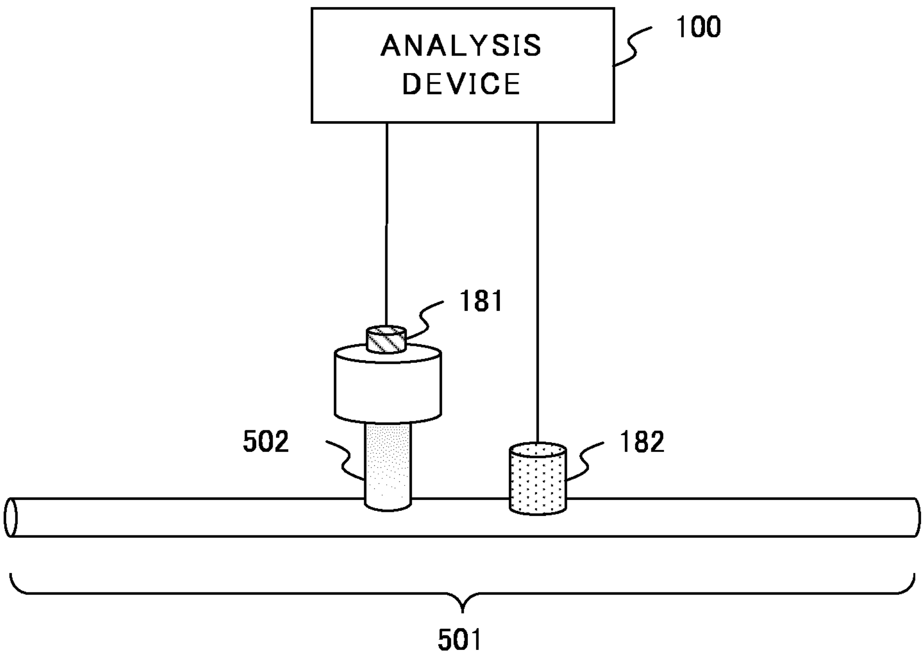

Fig.4

(A) (B)

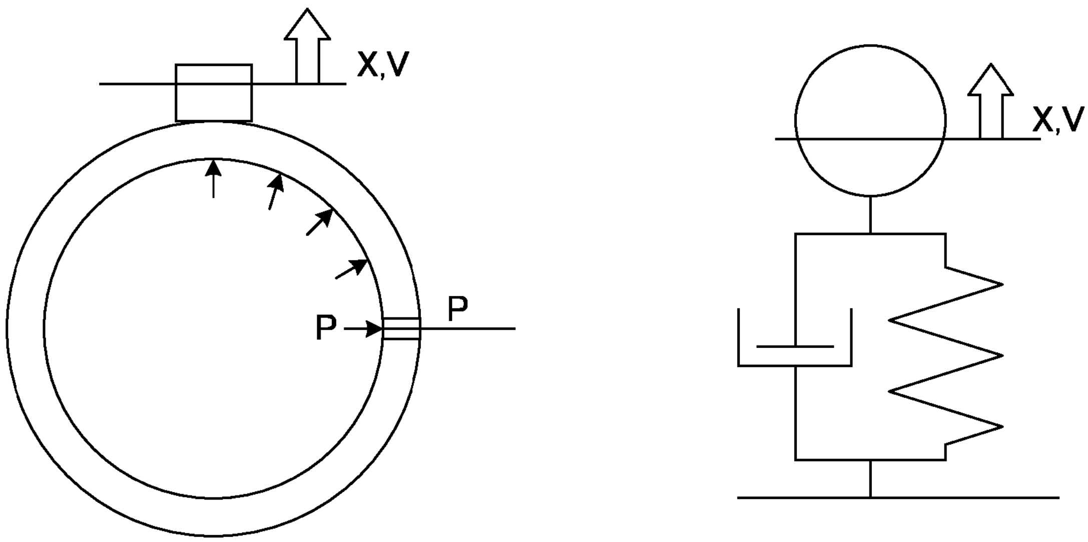

Fig.5

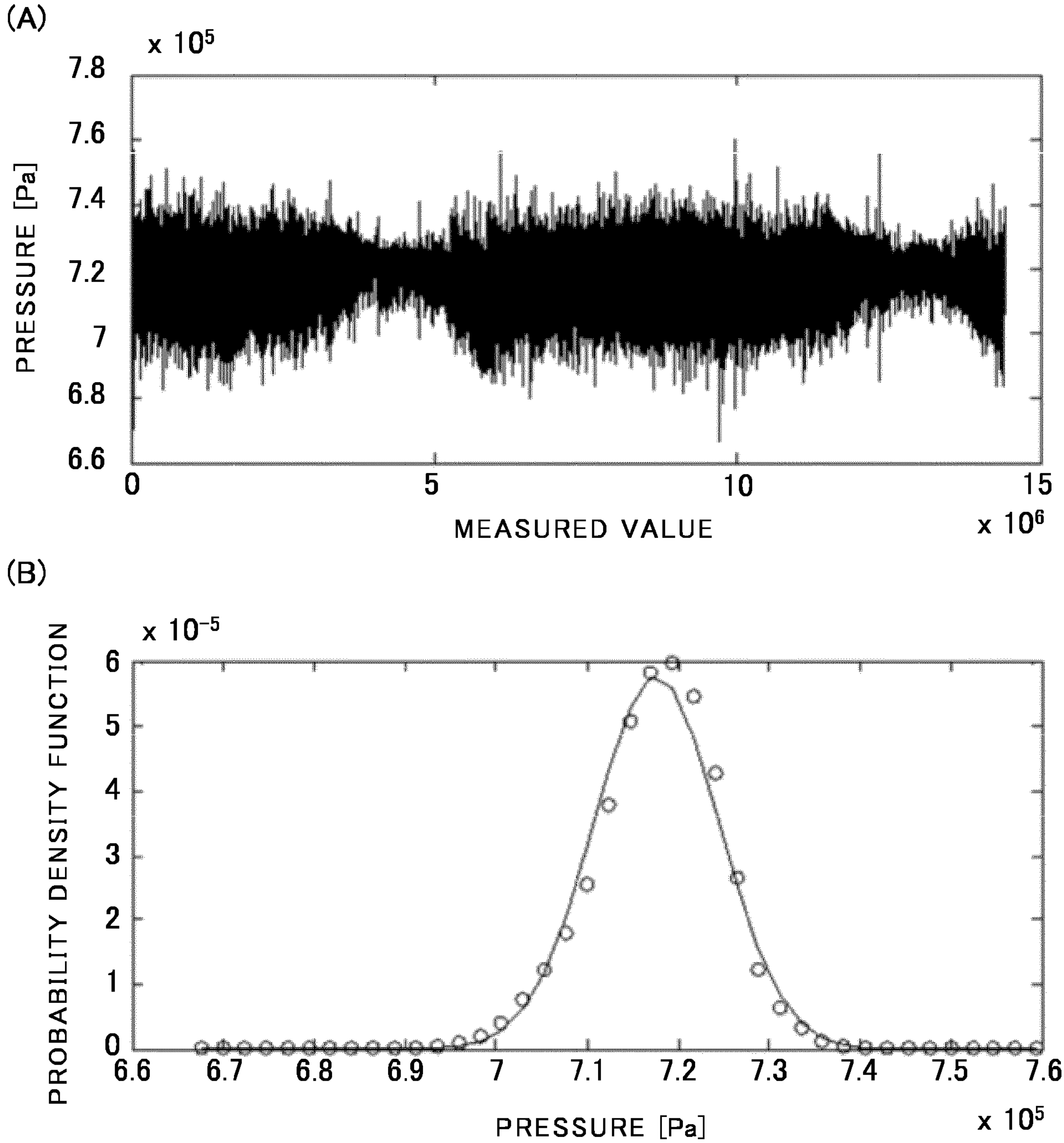
(A)
x 10^5
7.8
7.6
7.4
7.2
7
6.8
6.6
PRESSURE [Pa]
0
5
10
15
MEASURED VALUE
x 10^6
(B)
x 10^-5
6
5
4
3
2
1
0
PROBABILITY DENSITY FUNCTION
6.6
6.7
6.8
6.9
7
7.1
7.2
7.3
7.4
7.5
7.6
PRESSURE [Pa]
x 10^5

Fig.6

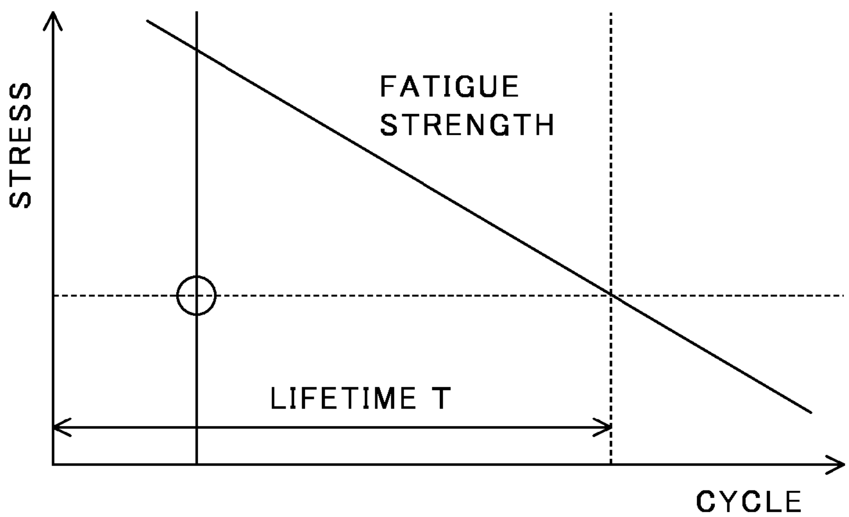

Fig.7

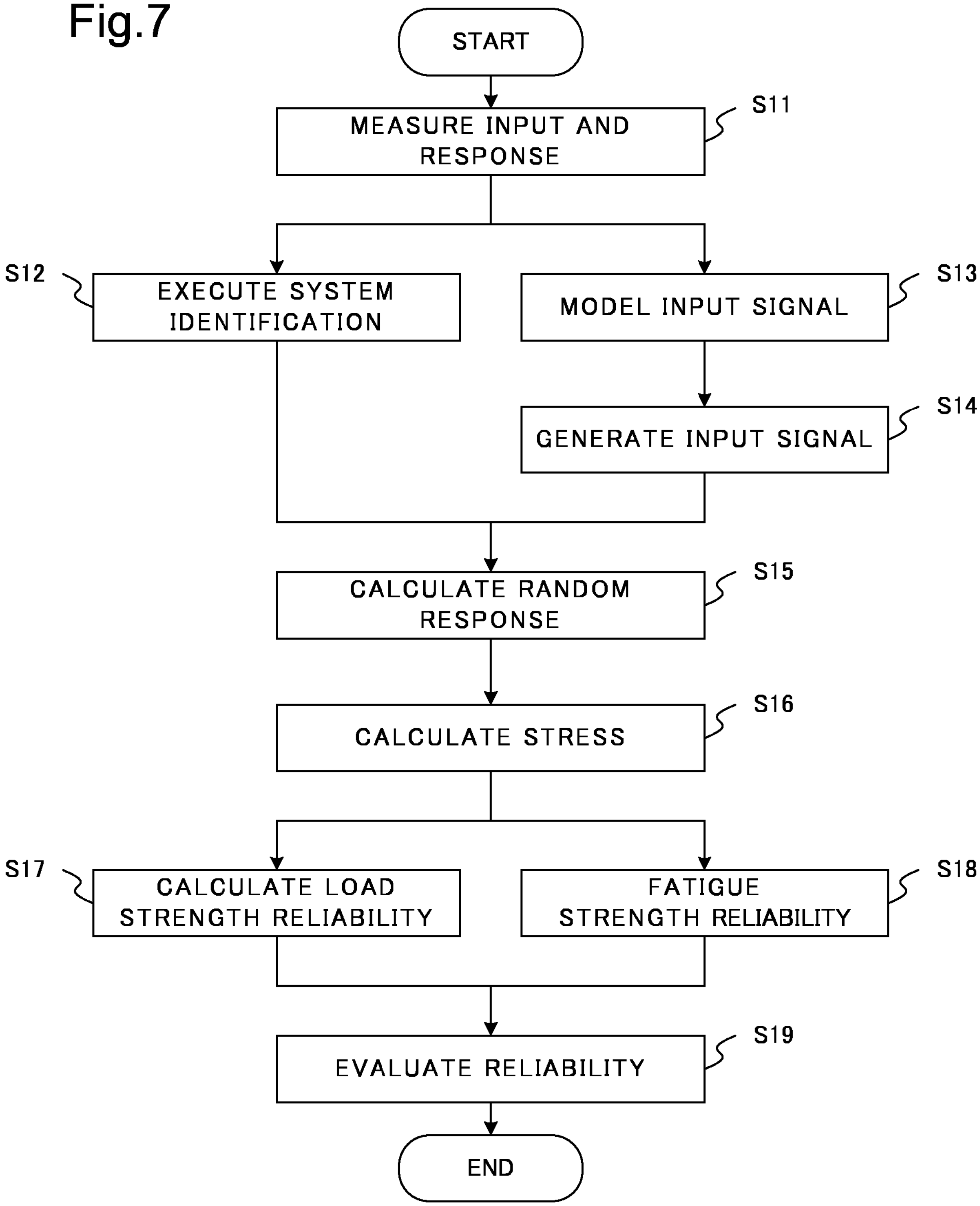
START
MEASURE INPUT AND RESPONSE
S11
S12
EXECUTE SYSTEM IDENTIFICATION
MODEL INPUT SIGNAL
S13
GENERATE INPUT SIGNAL
S14
CALCULATE RANDOM RESPONSE
S15
CALCULATE STRESS
S16
S17
CALCULATE LOAD STRENGTH RELIABILITY
FATIGUE STRENGTH RELIABILITY
S18
EVALUATE RELIABILITY
S19
END

Fig.8

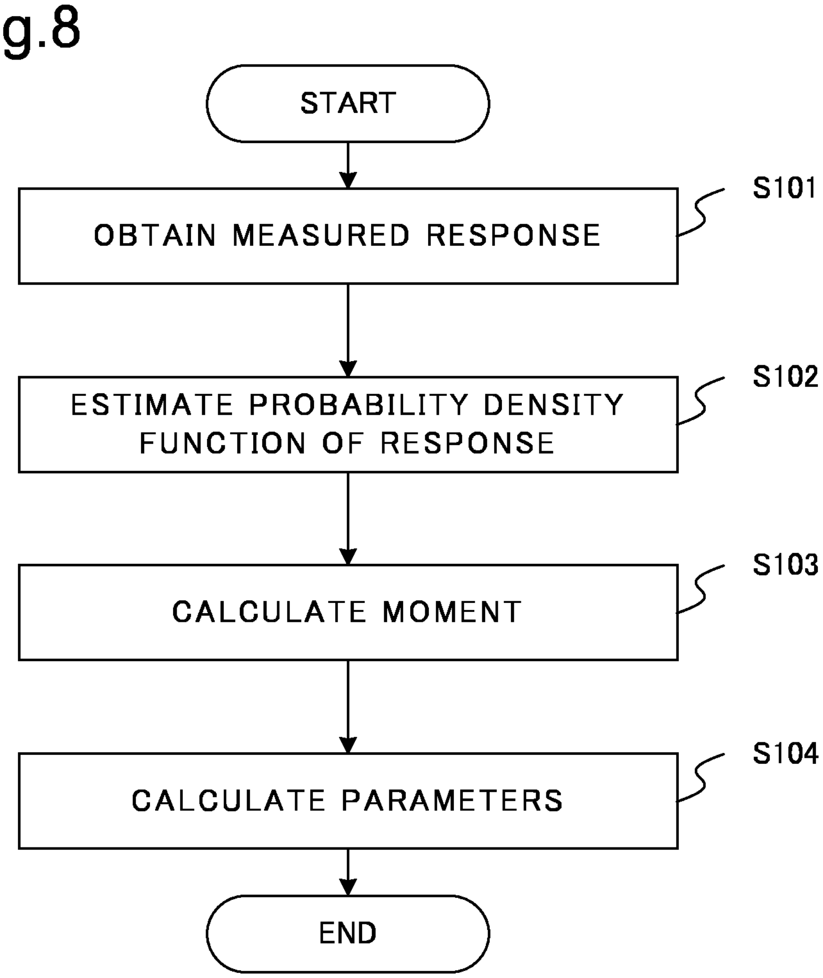
START
OBTAIN MEASURED RESPONSE
S101
ESTIMATE PROBABILITY DENSITY FUNCTION OF RESPONSE
S102
CALCULATE MOMENT
S103
CALCULATE PARAMETERS
S104
END

Fig.9

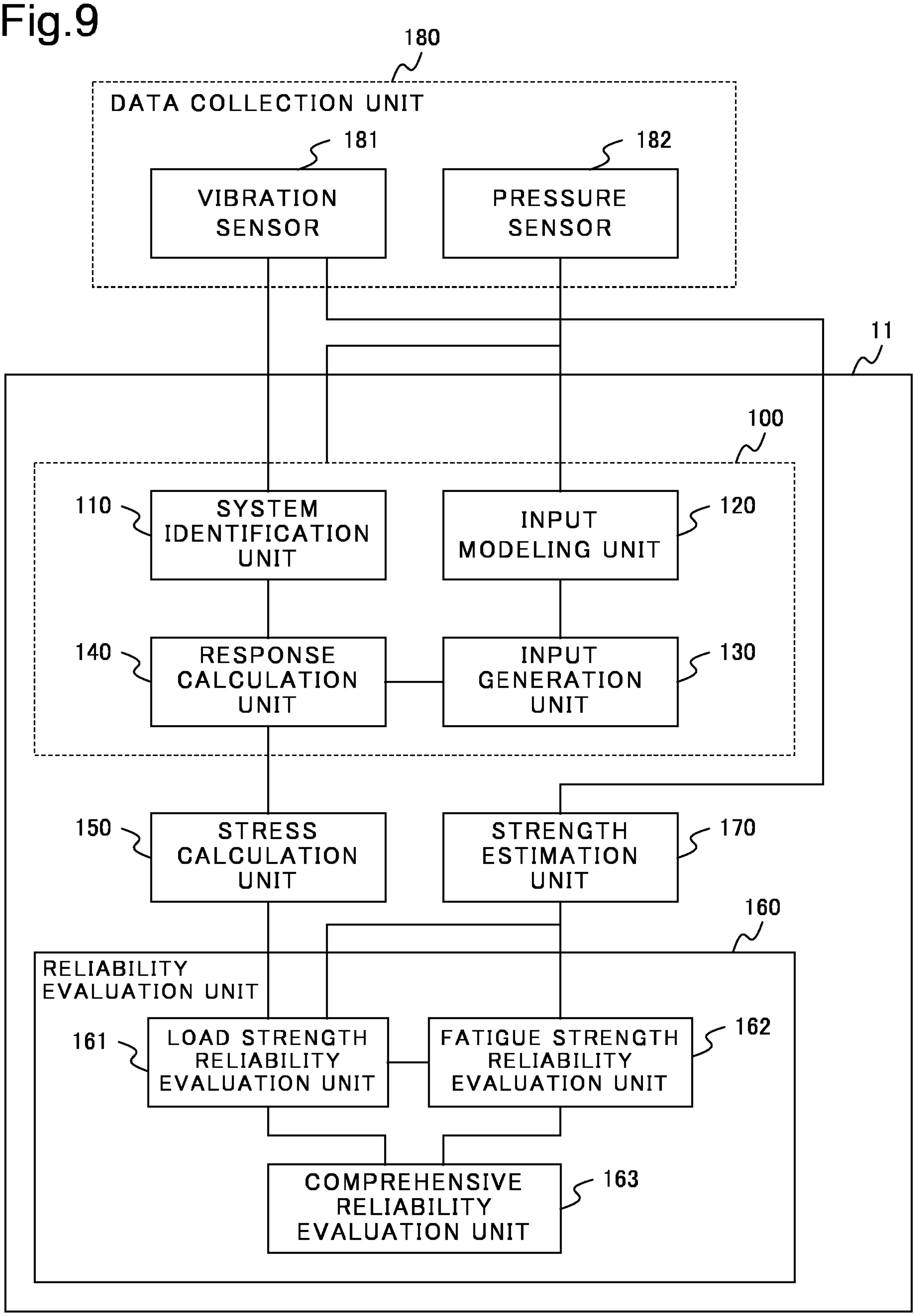
180
DATA COLLECTION UNIT
181
VIBRATION SENSOR
182
PRESSURE SENSOR
11
100
110
SYSTEM IDENTIFICATION UNIT
INPUT MODELING UNIT
120
140
RESPONSE CALCULATION UNIT
INPUT GENERATION UNIT
130
150
STRESS CALCULATION UNIT
STRENGTH ESTIMATION UNIT
170
160
RELIABILITY EVALUATION UNIT
161
LOAD STRENGTH RELIABILITY EVALUATION UNIT
FATIGUE STRENGTH RELIABILITY EVALUATION UNIT
162
COMPREHENSIVE RELIABILITY EVALUATION UNIT
163

Fig.10

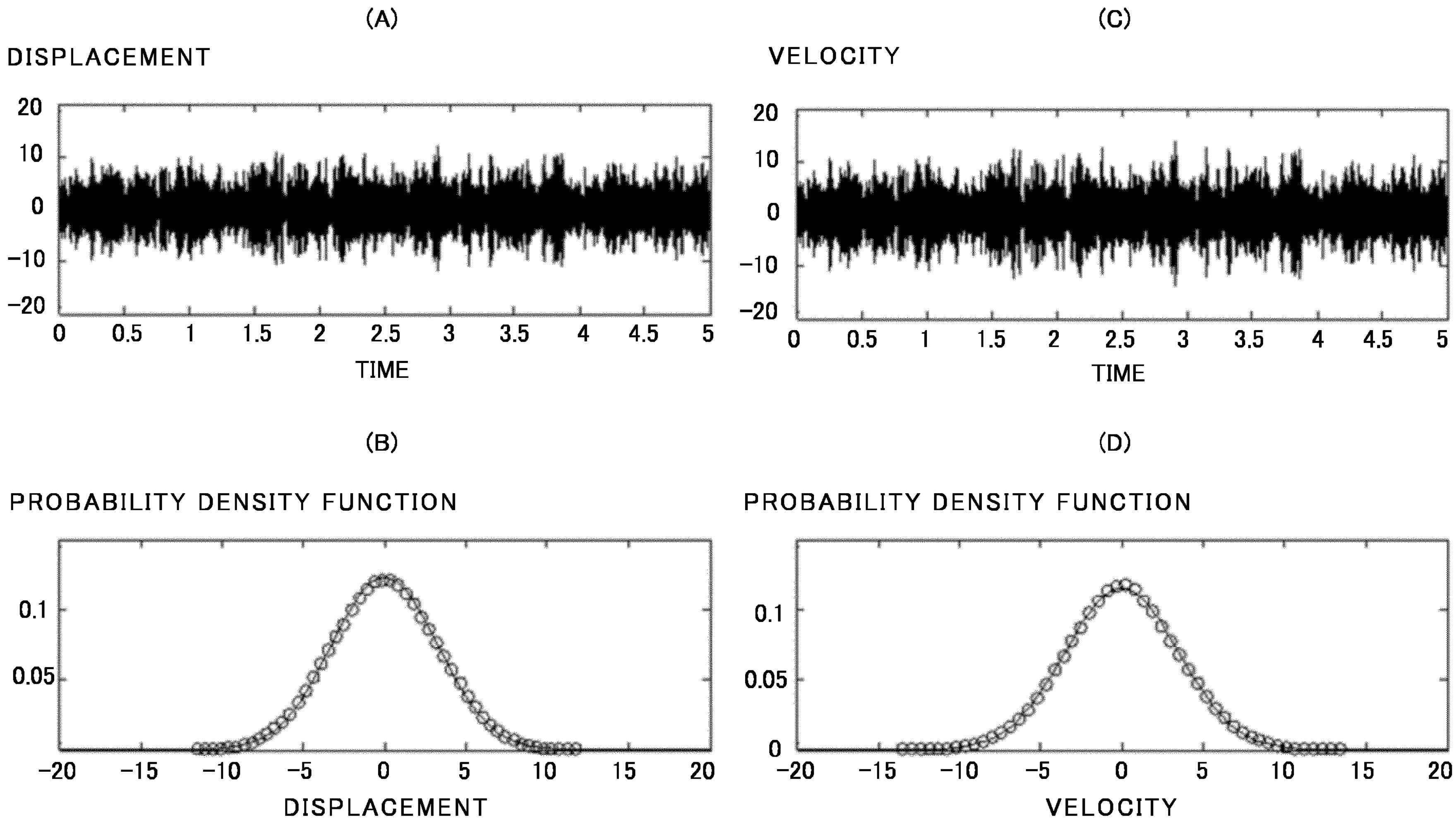
(A)
DISPLACEMENT
20
10
0
−10
−20
0
0.5
1
1.5
2
2.5
3
3.5
4
4.5
5
TIME
(C)
VELOCITY
20
10
0
−10
−20
0
0.5
1
1.5
2
2.5
3
3.5
4
4.5
5
TIME
(B)
PROBABILITY DENSITY FUNCTION
0.1
0.05
−20
−15
−10
−5
0
5
10
15
20
DISPLACEMENT
(D)
PROBABILITY DENSITY FUNCTION
0.1
0.05
0
−20
−15
−10
−5
0
5
10
15
20
VELOCITY

Fig.11

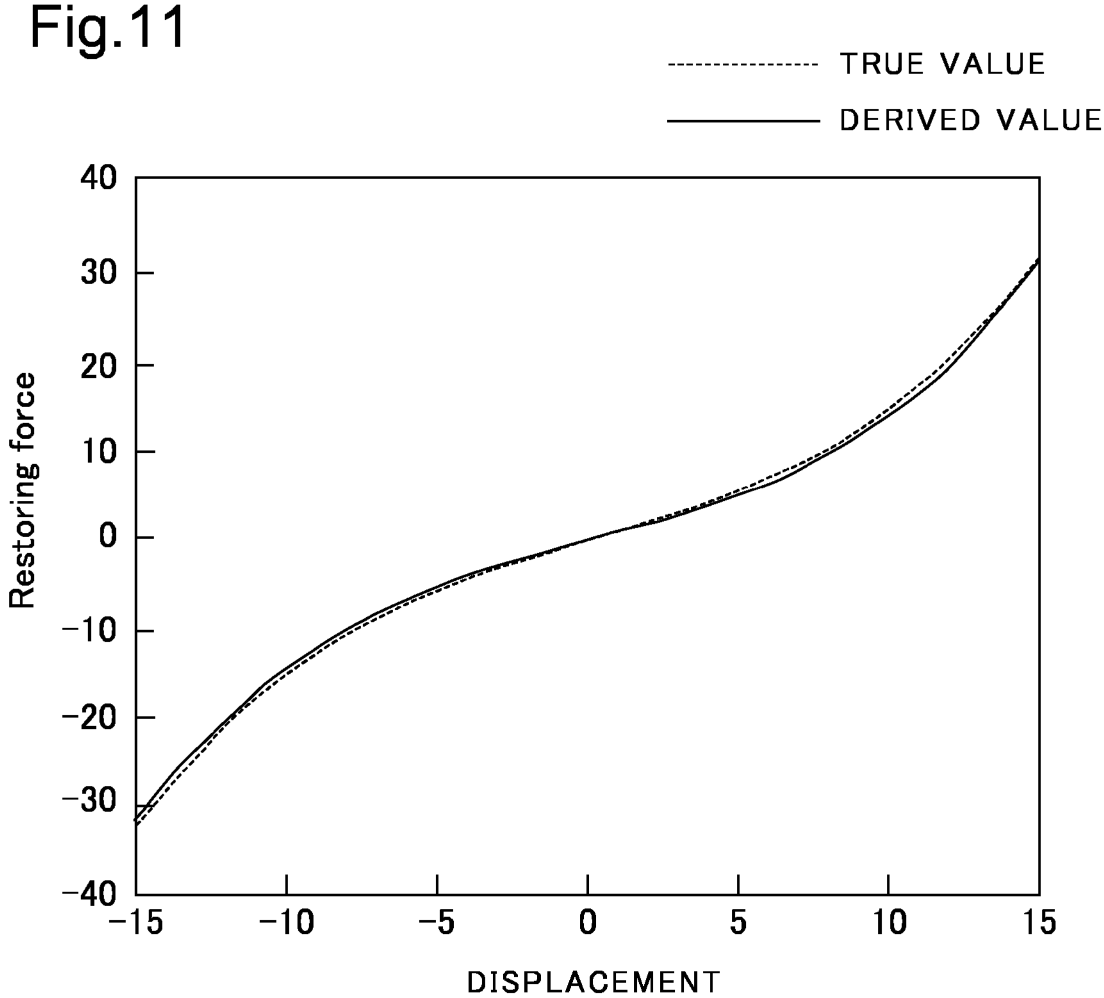
TRUE VALUE
DERIVED VALUE
40
30
20
10
0
−10
−20
−30
−40
Restoring force
−15
−10
−5
0
5
10
15
DISPLACEMENT

Fig.12

(A)

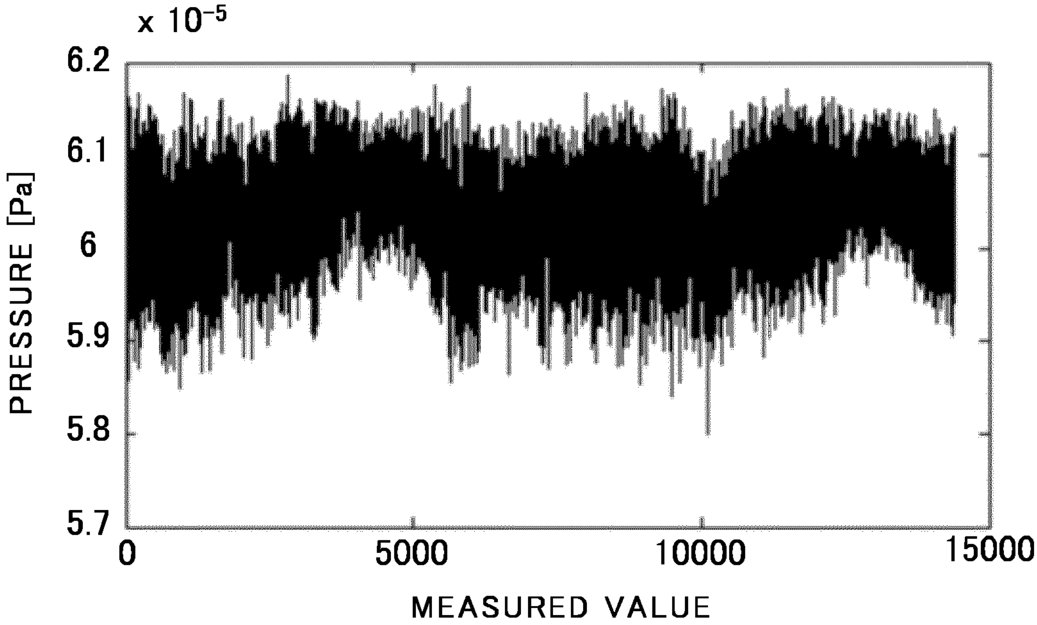
x 10⁻⁵
6.2
6.1
6
5.9
5.8
5.7
PRESSURE [Pa]
0
5000
10000
15000
MEASURED VALUE

(B)

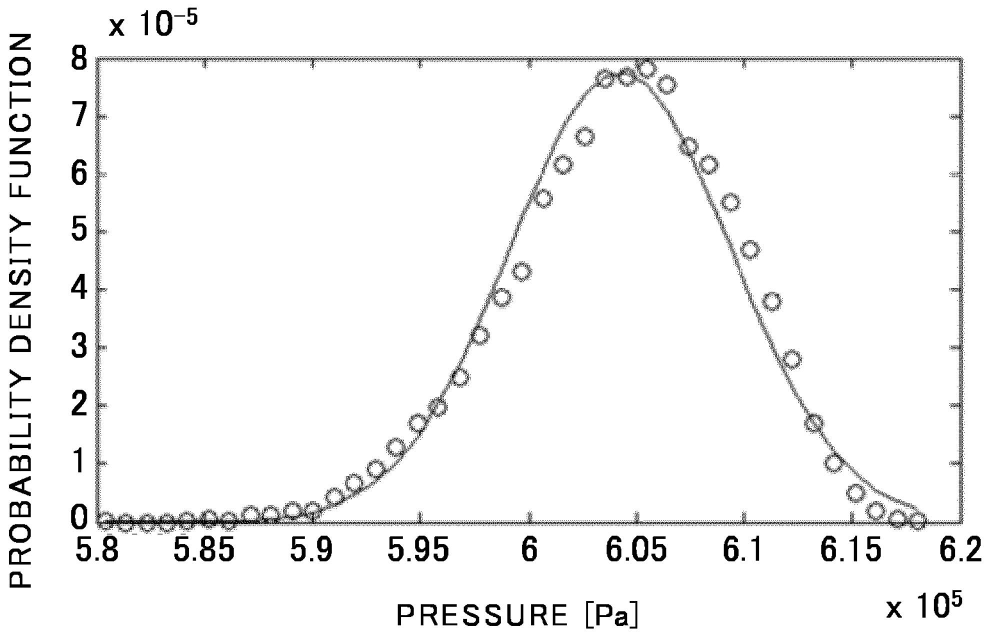
x 10⁻⁵
8
7
6
5
4
3
2
1
0
PROBABILITY DENSITY FUNCTION
5.8
5.85
5.9
5.95
6
6.05
6.1
6.15
6.2
PRESSURE [Pa]
x 10⁵

Fig.13

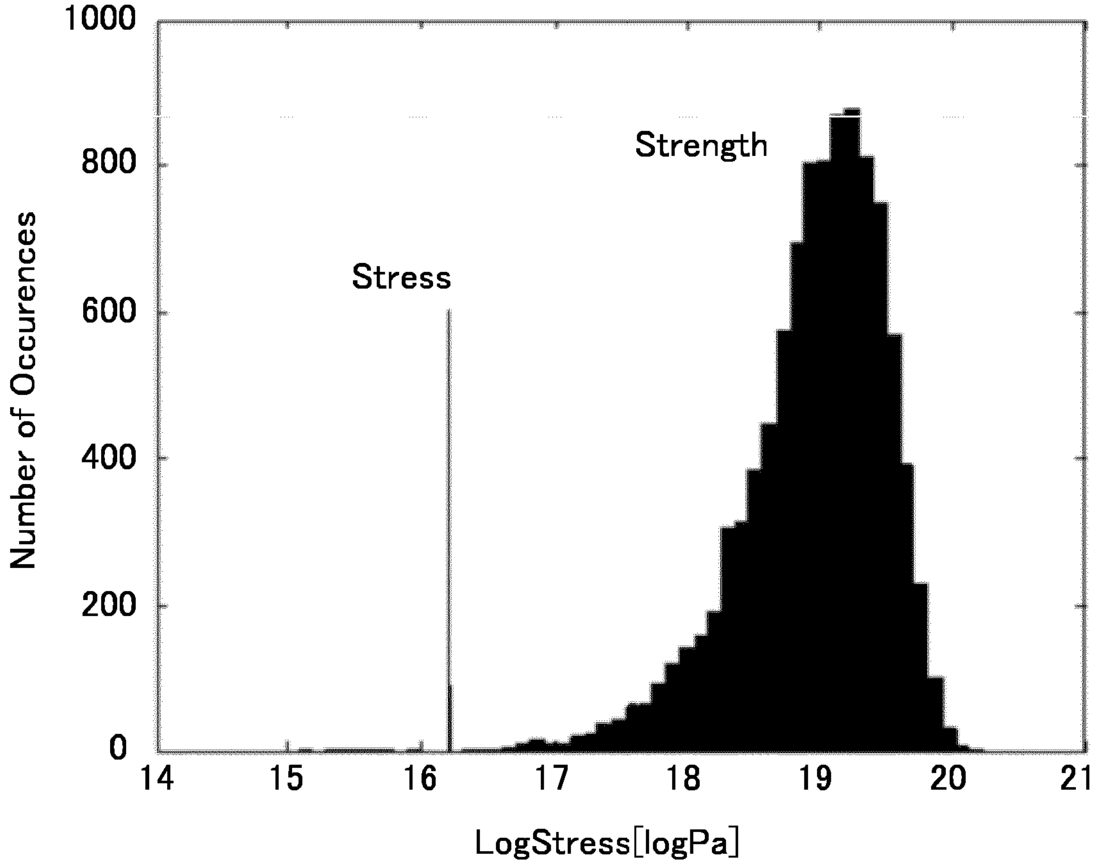
1000
800
600
400
200
0
Number of Occurences
Stress
Strength
14
15
16
17
18
19
20
21
LogStress[logPa]

Fig.14

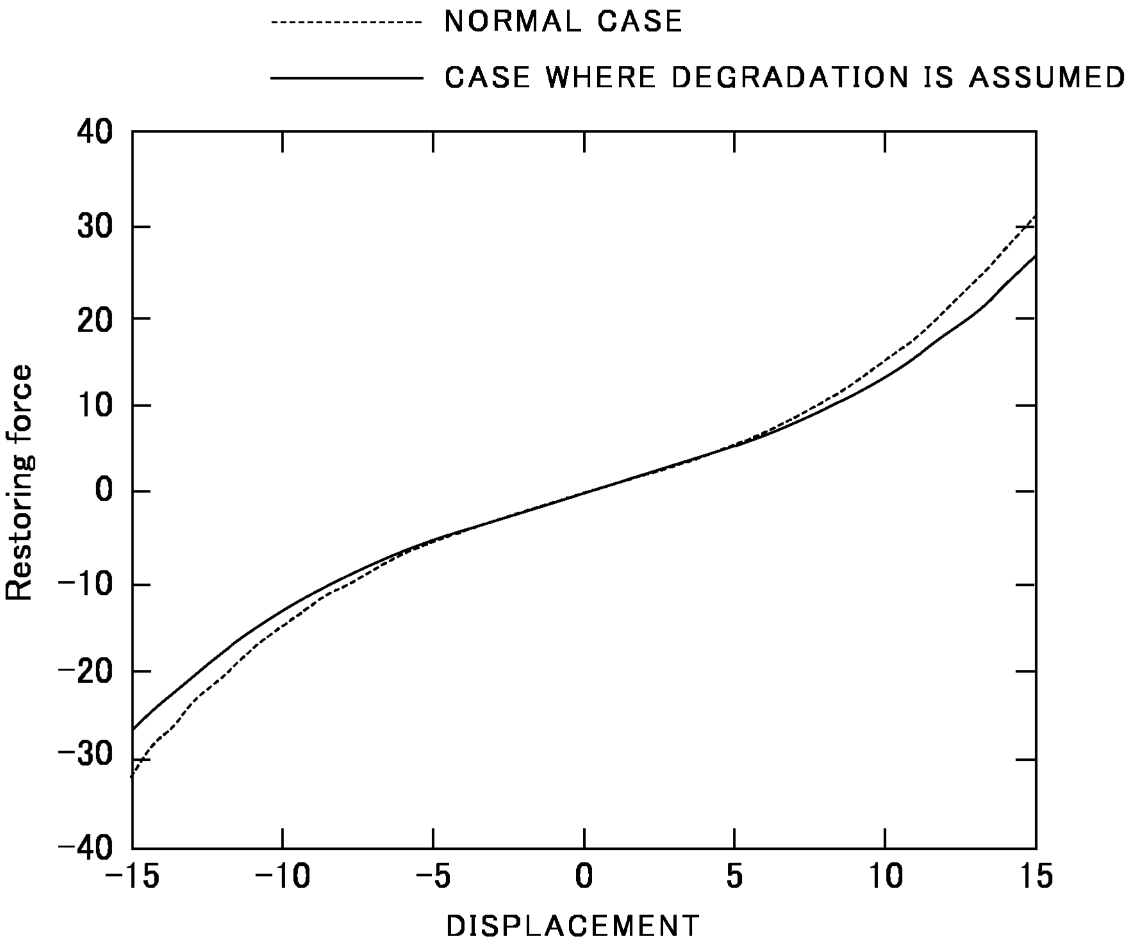
NORMAL CASE
CASE WHERE DEGRADATION IS ASSUMED
Restoring force
40
30
20
10
0
−10
−20
−30
−40
−15
−10
−5
0
5
10
15
DISPLACEMENT

Fig.15

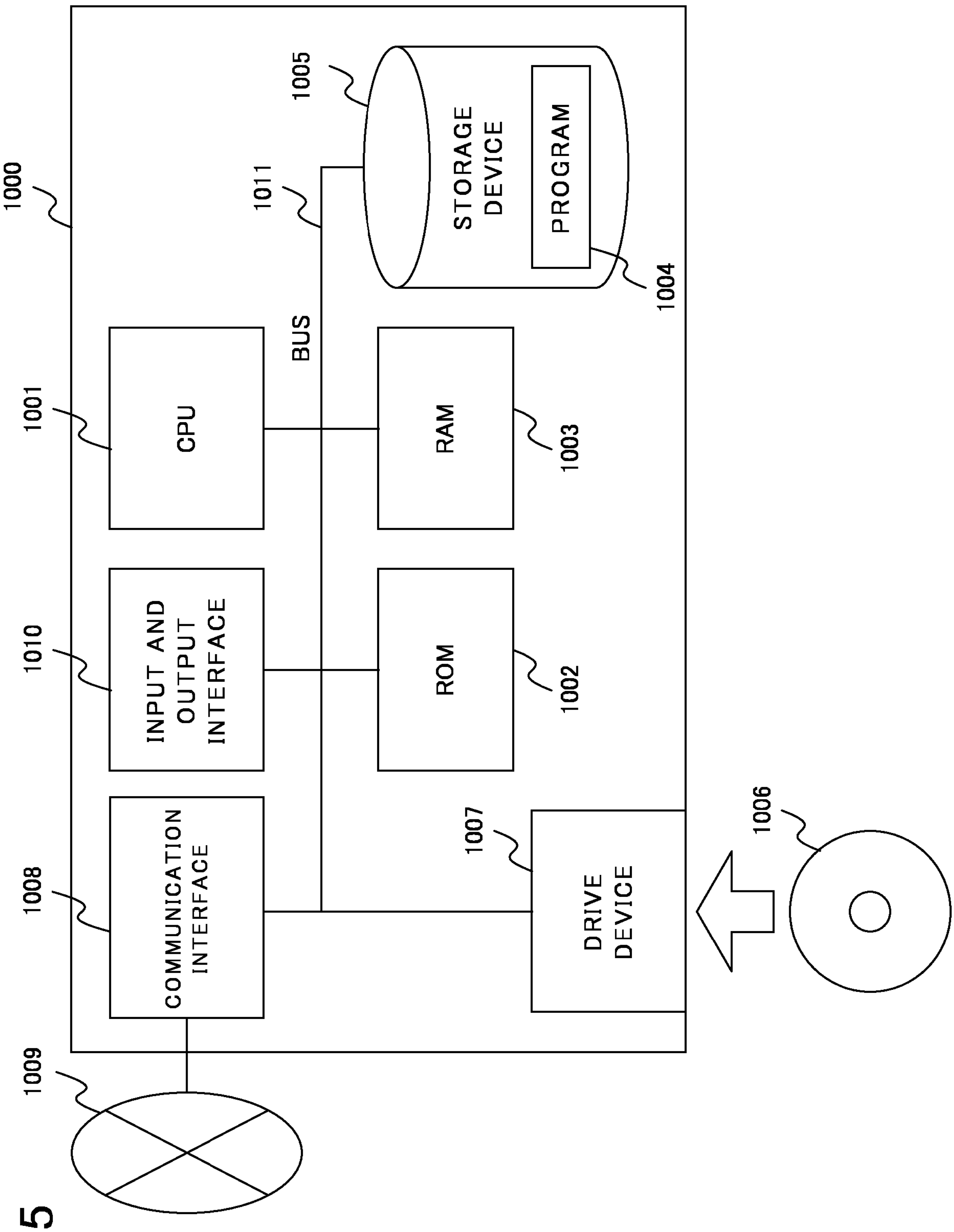
1000
1001
CPU
1010
INPUT AND OUTPUT INTERFACE
1008
COMMUNICATION INTERFACE
1009
1011
BUS
1005
STORAGE DEVICE
PROGRAM
1004
RAM
1003
ROM
1002
1007
DRIVE DEVICE
1006

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H2167463 A
- US 6341258 B
- WO 2017053262 A
- JP H10339685 A
- WO 2017011850 A


### Non-patent literature cited in the description


- **JESSON DA ; MOHEBBI H ; FARROW J ; MULHERON MJ ; SMITH PA.** On the condition assessment of cast iron trunk main: The effect of microstructure and inservice graphitisation on mechanical properties in flexure. *Materials Science and Engineering A,* 2013, vol. 576, 192-201